# EUROPEAN PATENT APPLICATION

(11) **EP 3 789 888 A1**
(43) Date of publication of application: **10.03.2021**
(21) Application number: 19796694.8
(22) Date of filing: 22.04.2019
(51) Int. Cl.: G06F 16/90

(54) **INFORMATION PROCESSING DEVICE, INFORMATION PROCESSING METHOD, AND PROGRAM**

(30) Priority: 01.05.2018 JP 2018088422
(71) Applicant: TRIART, INC., Iizuka-shi, Fukuoka 820-8517 (JP)
(72) Inventor: IMAZU Kentaro, Iizuka-shi, Fukuoka 820-8517 (JP); MIYAMOTO Akihiro, Iizuka-shi, Fukuoka 820-8517 (JP); NOMURA Yusuke, Iizuka-shi, Fukuoka 820-8517 (JP)
(74) Representative: HGF
(86) International application number: PCT/JP2019/017015
(87) International publication number: WO 2019/211999

(57) **Abstract**

An information processing device is provided with a first processing unit that sends first question data, the first question data being data of a first question, along a first route that includes one or more other information processing devices. The first processing unit is provided with a second processing unit that computes a first value regarding a candidate of the first route on a basis of information expressing the first question and first correspondence information, and a third processing unit that decides the first route along which to send the first question data on a basis of the first value computed for the candidate of the first route and a first condition.

## Description

### Technical Field

The present invention relates to an information processing device, to an information processing method, and to a program.

This application claims priority based on Japanese Patent Application No. 2018-088422 filed May 1, 2018, the contents of which are hereby incorporated by reference.

### Background Art

In this specification, for the sake of explanation, querying for information is called a "question", and returning the queried information in response to such a question is called an "answer".

Here, "question" and "answer" are terms used for convenience, and for example, a term such as "query" or "request" may be used instead of "question", while a term such as "response" or "reply" may be used instead of "answer".

Chord is known as a method of searching for content efficiently on a 1:1 (also referred to as a P2P) network. Chord is an algorithm that yields a distributed hash table, and uses a hash of a piece of content to determine a node that stores the content.

### Citation List

### Non-Patent Literature

Non-Patent Literature 1: Ion Stoica, Robert Morris, David Karger, M. Frans Kaashoek, Hari Balakrishnan, "Chord: A Scalable Peer-to-peer Lookup Service for Internet Applications", ACM SIGCOMM Computer Communication Review, October 2001, Volume 31, Issue 4, p. 149-160

### Summary of Invention

### Technical Problem

However, technology of the related art such as Chord is inadequate with respect to deciding an appropriate route as a route for asking for necessary information in a question and acquiring an answer.

In light of such circumstances, an embodiment of the present invention provides an information processing device, an information processing method, and a program capable of deciding an appropriate route as a route along which to send a question from an information processing device to obtain an answer to the question.

### Solution to Problem

An information processing device according to an embodiment of the present invention is provided with a first processing unit that sends first question data, the first question data being data of a first question, along a first route that includes one or more other information processing devices, in which the first processing unit is provided with a second processing unit that computes a first value regarding a candidate of the first route on a basis of information expressing the first question and first correspondence information, and a third processing unit that decides the first route along which to send the first question data on a basis of the first value computed for the candidate of the first route and a first condition, the first correspondence information is information associating first information, first specifying information that is information specifying the other information processing device, and first degree of correlation information that is information expressing a degree of correlation between the first information and the first specifying information, the first value is a value expressing a degree of expectation regarding a first answer to the first question, the first condition is a condition on deciding the first route along which to send the first question data from the candidate of the first route on a basis of the first value, and in a case in which a candidate of the first route includes a plurality of other information processing devices, the first value is a value expressing a comprehensive degree of expectation related to the first answer to the first question from the plurality of other information processing devices.

An information processing device according to an embodiment of the present invention is provided with a first processing unit that sends first question data, the first question data being data of a first question, along a first route that includes one or more other information processing devices, in which the first processing unit is provided with a second processing unit that computes a first value regarding a candidate of the first route on a basis of information expressing the first question and first correspondence information, and a third processing unit that decides the first route along which to send the first question data on a basis of the first value computed for the candidate of the first route and a first condition, the first correspondence information is information associating first information, first specifying information that is information specifying the other information processing device, and first degree of correlation information that is information expressing a degree of correlation between the first information and the first specifying information, the first value is a value expressing a degree of expectation regarding a first answer to the first question, the first condition is a condition on deciding the first route along which to send the first question data from the candidate of the first route on a basis of the first value, and the first route includes a route section in which two or more other information processing devices are arranged in series.

An information processing device according to an embodiment of the present invention is provided with a first processing unit that sends first question data, the first question data being data of a first question, along a first route that includes one or more other information processing devices, in which the first processing unit is provided with a second processing unit that computes a first value regarding a candidate of the first route on a basis of information expressing the first question and first correspondence information, and a third processing unit that decides the first route along which to send the first question data on a basis of the first value computed for the candidate of the first route and a first condition, the first correspondence information is information associating first information, first specifying information that is information specifying the other information processing device, and first degree of correlation information that is information expressing a degree of correlation between the first information and the first specifying information, the first value is a value expressing a degree of expectation regarding a first answer to the first question, the first condition is a condition on deciding the first route along which to send the first question data from the candidate of the first route on a basis of the first value, the first question data includes information related to a method of returning the first answer, and the method of returning the first answer includes information specifying either a method of directly returning the first answer to the information processing device or a method of indirectly returning the first answer to the information processing device.

An information processing device according to an embodiment of the present invention is provided with a first processing unit that sends first question data, the first question data being data of a first question, along a first route that includes one or more other information processing devices, in which the first processing unit is provided with a second processing unit that computes a first value regarding a candidate of the first route on a basis of information expressing the first question and first correspondence information, and a third processing unit that decides the first route along which to send the first question data on a basis of the first value computed for the candidate of the first route and a first condition, the first correspondence information is information associating first information, first specifying information that is information specifying the other information processing device, and first degree of correlation information that is information expressing a degree of correlation between the first information and the first specifying information, the first value is a value expressing a degree of expectation regarding a first answer to the first question, the first condition is a condition on deciding the first route along which to send the first question data from the candidate of the first route on a basis of the first value, the first processing unit is provided with a fifth processing unit that determines content of a second question in second question data sent from a second information processing device, and a sixth processing unit that outputs second answer data with respect to the second question data on a basis of a result of determining the content of the second question, the second question data includes information related to a second route, and the first processing unit is provided with a seventh processing unit that outputs third question data to an output destination based on the second route, the third question data being data of a third question based on the second question.

An information processing device according to one aspect of the present invention may also be configured such that the second processing unit computes the first value for a plurality of candidates of the first route, and the third processing unit decides one first route from among the plurality of candidates of the first route.

An information processing device according to one aspect of the present invention may also be configured such that the first route includes a route section in which two or more other information processing devices are arranged in parallel.

An information processing device according to one aspect of the present invention may also be configured such that the first question data includes information related to the first route.

An information processing device according to one aspect of the present invention may also be configured such that the first processing unit is provided with a fourth processing unit that updates the first correspondence information.

An information processing device according to one aspect of the present invention may also be configured such that the first processing unit is provided with an eighth processing unit that converts first language information to second language information on a basis of second correspondence information, the second correspondence information is information associating two pieces of language information and second degree of correlation information that is information expressing a degree of semantic correlation between the two pieces of language information, and in a case in which the eighth processing unit converts the first language information included in information expressing the first question to the second language information on a basis of the second correspondence information, the first processing unit adjusts the first value on a basis of the second degree of correlation information associated with the first language information and the second language information.

An information processing device according to one aspect of the present invention may also be configured such that the first processing unit is provided with a ninth processing unit that converts first target information to second target information on a basis of third correspondence information, the third correspondence information is information associating two pieces of target information and third degree of correlation information that is information expressing a degree of correlation between the two pieces of target information, and in a case in which the ninth processing unit converts the first target information included in information expressing the first question to the second target information on a basis of the third correspondence information, the first processing unit adjusts the first value on a basis of the third degree of correlation information associated with the first target information and the second target information.

An information processing method according to an embodiment of the present invention is an information processing method performed in an information processing device, and includes: sending, by a first processing unit of the information processing device, first question data, the first question data being data of a first question, along a first route that includes one or more other information processing devices; computing, by a second processing unit of the first processing unit, a first value regarding a candidate of the first route on a basis of information expressing the first question and first correspondence information; and deciding, by a third processing unit of the first processing unit, the first route along which to send the first question data on a basis of the first value computed for the candidate of the first route and a first condition, in which the first correspondence information is information associating first information, first specifying information that is information specifying the other information processing device, and first degree of correlation information that is information expressing a degree of correlation between the first information and the first specifying information, the first value is a value expressing a degree of expectation regarding a first answer to the first question, the first condition is a condition on deciding the first route along which to send the first question data from the candidate of the first route on a basis of the first value, and in a case in which a candidate of the first route includes a plurality of other information processing devices, the first value is a value expressing a comprehensive degree of expectation related to the first answer to the first question from the plurality of other information processing devices.

An information processing method according to an embodiment of the present invention is an information processing method performed in an information processing device, and includes: sending, by a first processing unit of the information processing device, first question data, the first question data being data of a first question, along a first route that includes one or more other information processing devices; computing, by a second processing unit of the first processing unit, a first value regarding a candidate of the first route on a basis of information expressing the first question and first correspondence information; and deciding, by a third processing unit of the first processing unit, the first route along which to send the first question data on a basis of the first value computed for the candidate of the first route and a first condition, in which the first correspondence information is information associating first information, first specifying information that is information specifying the other information processing device, and first degree of correlation information that is information expressing a degree of correlation between the first information and the first specifying information, the first value is a value expressing a degree of expectation regarding a first answer to the first question, the first condition is a condition on deciding the first route along which to send the first question data from the candidate of the first route on a basis of the first value, and the first route includes a route section in which two or more other information processing devices are arranged in series.

An information processing method according to an embodiment of the present invention is an information processing method performed in an information processing device, and includes: sending, by a first processing unit of the information processing device, first question data, the first question data being data of a first question, along a first route that includes one or more other information processing devices; computing, by a second processing unit of the first processing unit, a first value regarding a candidate of the first route on a basis of information expressing the first question and first correspondence information; and deciding, by a third processing unit of the first processing unit, the first route along which to send the first question data on a basis of the first value computed for the candidate of the first route and a first condition, in which the first correspondence information is information associating first information, first specifying information that is information specifying the other information processing device, and first degree of correlation information that is information expressing a degree of correlation between the first information and the first specifying information, the first value is a value expressing a degree of expectation regarding a first answer to the first question, the first condition is a condition on deciding the first route along which to send the first question data from the candidate of the first route on a basis of the first value, the first question data includes information related to a method of returning the first answer, and the method of returning the first answer includes information specifying either a method of directly returning the first answer to the information processing device or a method of indirectly returning the first answer to the information processing device.

An information processing method according to an embodiment of the present invention is an information processing method performed in an information processing device, and includes: sending, by a first processing unit of the information processing device, first question data, the first question data being data of a first question, along a first route that includes one or more other information processing devices; computing, by a second processing unit of the first processing unit, a first value regarding a candidate of the first route on a basis of information expressing the first question and first correspondence information; deciding, by a third processing unit of the first processing unit, the first route along which to send the first question data on a basis of the first value computed for the candidate of the first route and a first condition, in which the first correspondence information is information associating first information, first specifying information that is information specifying the other information processing device, and first degree of correlation information that is information expressing a degree of correlation between the first information and the first specifying information, the first value is a value expressing a degree of expectation regarding a first answer to the first question, the first condition is a condition on deciding the first route along which to send the first question data from the candidate of the first route on a basis of the first value; determining, by a fifth processing unit of the first processing unit, content of a second question in second question data sent from a second information processing device; outputting, by a sixth processing unit of the first processing unit, second answer data with respect to the second question data on a basis of a result of determining the content of the second question, in which the second question data includes information related to a second route; and outputting, by a seventh processing unit of the first processing unit, third question data to an output destination based on the second route, the third question data being data of a third question based on the second question.

A program according to an embodiment of the present invention is a program causing a computer forming an information processing device to achieve: a function of sending first question data, the first question data being data of a first question, along a first route that includes one or more other information processing devices; a function of computing a first value regarding a candidate of the first route on a basis of information expressing the first question and first correspondence information; and a function of deciding the first route along which to send the first question data on a basis of the first value computed for the candidate of the first route and a first condition, in which the first correspondence information is information associating first information, first specifying information that is information specifying the other information processing device, and first degree of correlation information that is information expressing a degree of correlation between the first information and the first specifying information, the first value is a value expressing a degree of expectation regarding a first answer to the first question, the first condition is a condition on deciding the first route along which to send the first question data from the candidate of the first route on a basis of the first value, and in a case in which a candidate of the first route includes a plurality of other information processing devices, the first value is a value expressing a comprehensive degree of expectation related to the first answer to the first question from the plurality of other information processing devices.

A program according to an embodiment of the present invention is a program causing a computer forming an information processing device to achieve: a function of sending first question data, the first question data being data of a first question, along a first route that includes one or more other information processing devices; a function of computing a first value regarding a candidate of the first route on a basis of information expressing the first question and first correspondence information; and a function of deciding the first route along which to send the first question data on a basis of the first value computed for the candidate of the first route and a first condition, in which the first correspondence information is information associating first information, first specifying information that is information specifying the other information processing device, and first degree of correlation information that is information expressing a degree of correlation between the first information and the first specifying information, the first value is a value expressing a degree of expectation regarding a first answer to the first question, the first condition is a condition on deciding the first route along which to send the first question data from the candidate of the first route on a basis of the first value, and the first route includes a route section in which two or more other information processing devices are arranged in series.

A program according to an embodiment of the present invention is a program causing a computer forming an information processing device to achieve: a function of sending first question data, the first question data being data of a first question, along a first route that includes one or more other information processing devices; a function of computing a first value regarding a candidate of the first route on a basis of information expressing the first question and first correspondence information; and a function of deciding the first route along which to send the first question data on a basis of the first value computed for the candidate of the first route and a first condition, in which the first correspondence information is information associating first information, first specifying information that is information specifying the other information processing device, and first degree of correlation information that is information expressing a degree of correlation between the first information and the first specifying information, the first value is a value expressing a degree of expectation regarding a first answer to the first question, the first condition is a condition on deciding the first route along which to send the first question data from the candidate of the first route on a basis of the first value, the first question data includes information related to a method of returning the first answer, and the method of returning the first answer includes information specifying either a method of directly returning the first answer to the information processing device or a method of indirectly returning the first answer to the information processing device.

A program according to an embodiment of the present invention is a program causing a computer forming an information processing device to achieve: a function of sending first question data, the first question data being data of a first question, along a first route that includes one or more other information processing devices; a function of computing a first value regarding a candidate of the first route on a basis of information expressing the first question and first correspondence information; and a function of deciding the first route along which to send the first question data on a basis of the first value computed for the candidate of the first route and a first condition, in which the first correspondence information is information associating first information, first specifying information that is information specifying the other information processing device, and first degree of correlation information that is information expressing a degree of correlation between the first information and the first specifying information, the first value is a value expressing a degree of expectation regarding a first answer to the first question, the first condition is a condition on deciding the first route along which to send the first question data from the candidate of the first route on a basis of the first value; the program further causing the computer to achieve: a function of determining content of a second question in second question data sent from a second information processing device; and a function of outputting second answer data with respect to the second question data on a basis of a result of determining the content of the second question, in which the second question data includes information related to a second route; the program further causing the computer to achieve: a function of outputting third question data to an output destination based on the second route, the third question data being data of a third question based on the second question.

### Advantageous Effects of Invention

According to the information processing device, information processing method, and program described above, it is possible to decide an appropriate route as a route along which to send a question from an information processing device to obtain an answer to the question.

### Brief Description of Drawings

FIG. 1 is a diagram illustrating a schematic configuration example of an information processing system according to an embodiment of the present invention.
FIG. 2 is a diagram illustrating another example of a route along which question data and answer data are transmitted in the information processing system according to an embodiment of the present invention.
FIG. 3 is a diagram illustrating an example of a secondary route section along which secondary question data and answer data are transmitted in the information processing system according to an embodiment of the present invention.
FIG. 4 is a diagram illustrating a schematic configuration example of an information processing device according to an embodiment of the present invention.
FIG. 5 is a table illustrating an example of a relationship map according to an embodiment of the present invention.
FIG. 6 is a table illustrating an example of a language map according to an embodiment of the present invention.
FIG. 7 is a table illustrating an example of a file map according to an embodiment of the present invention.
FIG. 8 is a diagram illustrating an example of a processing sequence performed in the information processing device according to an embodiment of the present invention.
FIG. 9 is a diagram illustrating an example of a processing sequence performed in the information processing device according to an embodiment of the present invention.
FIG. 10 is a diagram illustrating an example of a processing sequence performed in the information processing device according to an embodiment of the present invention.
FIG. 11 is a diagram illustrating an example of a processing sequence performed in the information processing device according to an embodiment of the present invention.
FIG. 12 is a diagram illustrating a conceptual representation of a process in an applied example (confirmation of lecture cancellation) of the information processing system according to an embodiment of the present invention.
FIG. 13 is a diagram illustrating a conceptual representation of a process in an applied example (confirmation of intersection) of the information processing system according to an embodiment of the present invention.
FIG. 14 is a diagram illustrating an example of a situation at an intersection according to an embodiment of the present invention.
FIG. 15 is a diagram illustrating a conceptual representation of a process in an applied example (confirmation of payment) of the information processing system according to an embodiment of the present invention.
FIG. 16 is a diagram illustrating an example of a hardware configuration of an information processing device according to an embodiment of the present invention.

### Description of Embodiments

Embodiments of the present invention will be described in detail and with reference to the drawings.

### Overview of information processing system

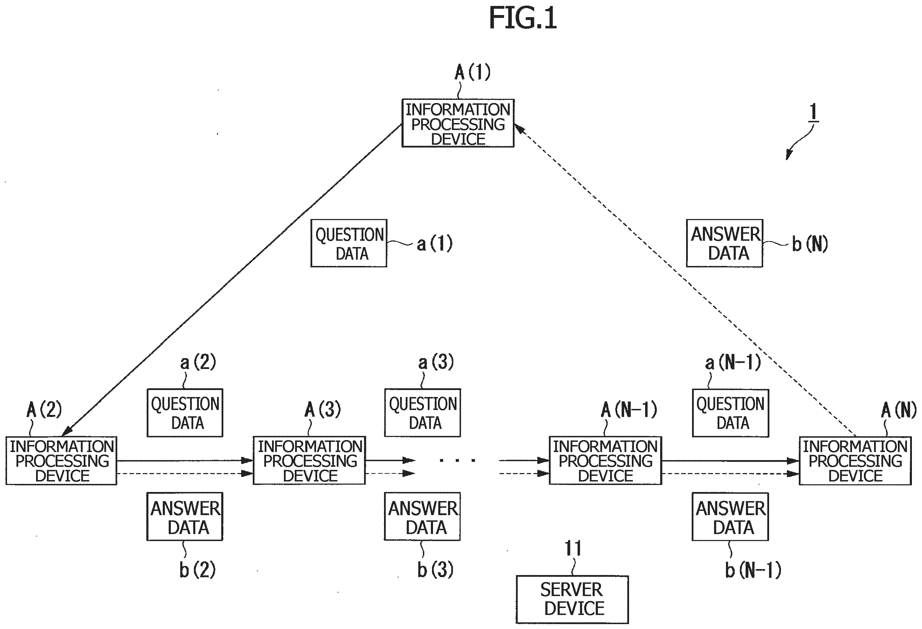

FIG. 1 is a diagram illustrating a schematic configuration example of an information processing system 1 according to an embodiment of the present invention.

The information processing system 1 according to the present embodiment is provided with N (in the present embodiment, N is taken to be an integer equal to or greater than two) information processing devices A(1) to A(N).

Note that in FIG. 1, five or more information processing devices A(1) to A(N) are illustrated as an example for convenience, but situations where N=2, N=3, or N=4 are also possible.

Here, in the present embodiment, the N information processing devices A(1) to A(N) have similar functions with regard to the functions described in the present embodiment.

In the present embodiment, the N information processing devices A(1) to A(N) are described by being distinguished sequentially (from 1 to N) for convenience, but any of the information processing devices A(1) to A(N) may act as an information processing device at any turn in the order.

Also, the information processing system 1 according to the present embodiment is provided with a server device 11.

Each of the information processing devices A(1) to A(N) may communicate with the server device 11. The communication may be wired communication, wireless communication, or both wired and wireless communication, for example.

Note that, as another example, the information processing system 1 does not have to be provided with the server device 11, or alternatively, one or more of the information processing devices A(1) to A(N) may also have functions for acting as a server device.

Each of the information processing devices A(1) to A(N) includes a function of communicating with the other information processing devices A(1) to A(N) as communication peers. The communication may be wired communication, wireless communication, or both wired and wireless communication, for example.

Additionally, the communication performed by each of the information processing devices A(1) to A(N) may be 1:1 (also referred to as P2P) communication, server-client communication, or some other method of communication. Also, the communication performed by each of the information processing devices A(1) to A(N) may be communication using a virtual private network (VPN), for example.

Also, the communication performed by each of the information processing devices A(1) to A(N) may be short-range communication, for example.

Each of the information processing devices A(1) to A(N) may be any of various types of devices. Each of the information processing devices A(1) to A(N) may be a device that lacks server functions or a device that includes server functions, for example. Each of the information processing devices A(1) to A(N) may be, a computer such as a laptop computer, a desktop computer, a tablet computer, or a smartphone, for example, or may be another type of computer. The other type of computer may be a computer provided in a vehicle (for example, a means of transportation) such as an automobile, for example. Each of the information processing devices A(1) to A(N) may be configured as a physical terminal or as a virtual terminal, for example. Each of the information processing devices A(1) to A(N) may be on an internal network or on the Internet, for example.

With regard to the types of such devices, the information processing devices A(1) to A(N) may be the same type of device or different types of devices, for example.

Also, each of the information processing devices A(1) to A(N) may be what is called an Internet of Things (IoT) or an information and communications technology (ICT) device, for example.

Furthermore, each of the information processing devices A(1) to A(N) may be managed by any person. Each of the information processing devices A(1) to A(N) may be managed by an individual (for example, an owner) or by an organization (for example, an owning organization or the like), for example. With regard to the types of such administrators, the information processing devices A(1) to A(N) may be managed by the same type of person or by different types of persons, for example.

### Overview of operations by information processing system

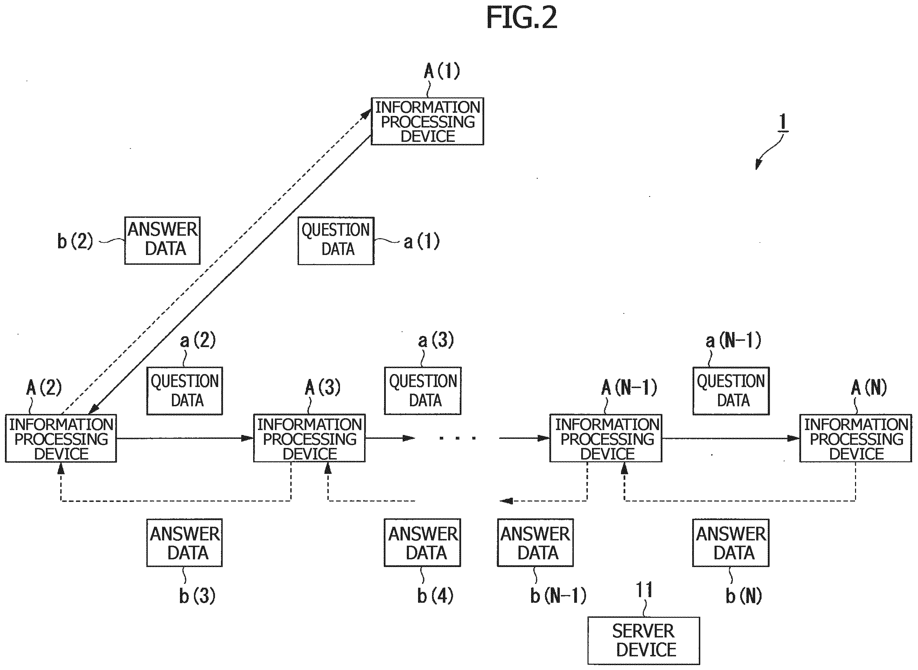

FIGS. 1 to 3 will be referenced to illustrate an overview of operations performed in the information processing system 1 according to the present embodiment. In the example of FIG. 1 and the example of FIG. 2, the way in which an answer is returned (returning method) is different.

FIG. 1 illustrates an example of a route along which question data a(1) to a(N-1) and answer data b(2) to b(N) are transmitted in the information processing system 1 according to an embodiment of the present invention.

FIG. 2 is a diagram illustrating another example of a route along which the question data a(1) to a(N-1) and the answer data b(2) to b(N) are transmitted in the information processing system 1 according to an embodiment of the present invention.

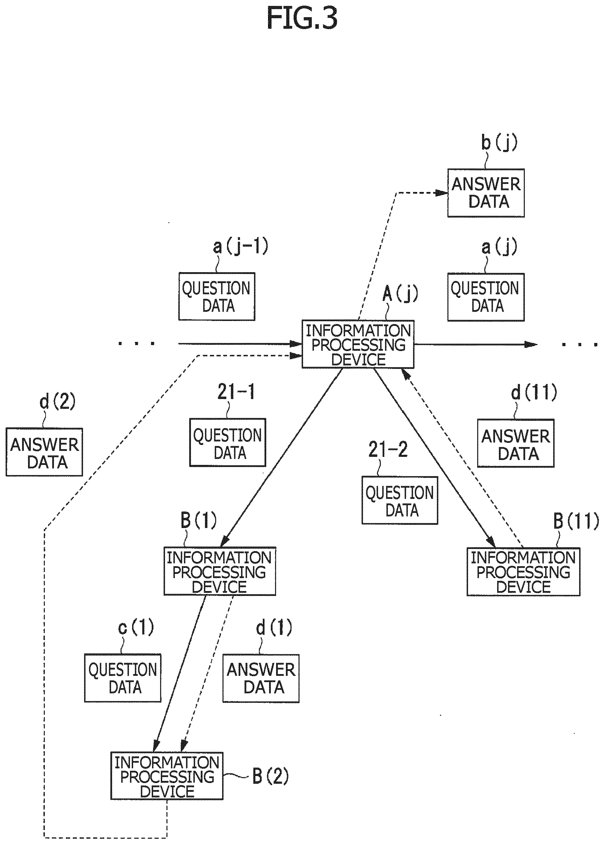

FIG. 3 is a diagram illustrating an example of a secondary route section along which secondary question data 21-1 to 21-2 and c(1) as well as answer data d(1) to d(2) and d(11) are transmitted in the information processing system 1 according to an embodiment of the present invention.

In the present embodiment, one information processing device A(1) sends a question to the other information processing devices A(2) to A(N), and the other information processing devices A(2) to A(N) return an answer to the question by sending the answer to the information processing device A(1).

At this time, the information processing device A(1) decides a route along which the question is to be transmitted, and causes the question to be transmitted along the decided route. The route is specified by one or more nodes included on the route (here, the other information processing devices A(2) to A(N)) and the order of the node(s), for example.

Also, the information processing device A(1) controls the route along which the answers to the question return to the information processing device A(1). For the route, like the example in FIG. 1, a route along which answers to the question return to the information processing device A(1) via a looping route that starts and ends at the information processing device A(1) may be used, or like the example in FIG. 2, a route along which the information processing devices A(2) to A(N) receiving the question return answers to the question directly to the other information processing devices A(1) to A(N-1) that sent the question may be used, for example.

The example in FIG. 1 will be described.

In the present embodiment, one information processing device A(1) (referred to as the "first information processing device A(1)" for convenience) acts as the leader and sets the second to Nth other information processing devices A(2) to A(N).

Note that, although not illustrated in FIG. 1, the information processing system 1 may also be provided with information processing devices other than the N information processing devices A(1) to A(N). In this case, the first information processing device A(1) selects and sets the second to Nth other information processing devices A(2) to A(N) from among more than (N-1) information processing devices other than the information processing device A(1) itself.

Here, in the present embodiment, the first information processing device A(1) from which the question originates may be predetermined, or may be determined at any timing, for example. As a specific example, the first information processing device A(1) may be determined according to an operation performed by a user (person) at any timing. As another specific example, the first information processing device A(1) may be determined at any timing according to an automatic determination that a predetermined condition has been satisfied.

Also, in the present embodiment, the second to Nth information processing devices A(2) to A(N) from which an answer is requested may be predetermined, or may be determined at any timing, for example. As a specific example, the second to Nth information processing devices A(2) to A(N) may be determined by a predetermined method at the timing when the question is produced in the first information processing device A(1). As another specific example, the second to Nth information processing devices A(2) to A(N) may be determined by the first information processing device A(1) by a predetermined method at any timing before the question is sent out from the first information processing device A(1).

The first information processing device A(1) transmits question data a(1), which includes data that expresses the content of a question, to the second information processing device A(2).

In the present embodiment, the question data a(1) includes information making it possible to specify a route along which to transmit the question data a(1). Also, in the present embodiment, the question data a(1) includes information specifying how to return an answer to the question in the question data a(1).

Note that the question data a(1) may also be data stating a predetermined algorithm, and in this case, the question data a(1) includes information indicating the algorithm. The algorithm may also prescribe a process, such as a process related to the content of a question or a process related to the content of an answer, for example.

The second information processing device A(2) receives the question data a(1) transmitted from the first information processing device A(1).

The second information processing device A(2) transmits answer data b(2), which includes data expressing the content of an answer to the content of the question expressed by the received question data a(1), and question data a(2) according to the question data a(1) and the like, to the third information processing device A(3).

In the present embodiment, the question data a(2) includes information making it possible to specify a route along which to transmit the question data a(2). Also, in the present embodiment, the question data a(2) includes information specifying how to return an answer to the question data a(2).

Here, in the example of FIG. 1, the answer data b(2) is taken to include content that forms a part of an answer to the content of the question expressed by the question data a(1). Additionally, in the example of FIG. 1, the question data a(2) is taken to be data for asking for the remaining part or parts of the answer missing from the answer data b(2). In other words, in the example of FIG. 1, the content of the question expressed by the question data a(1) can be logically separated into the content of two or more questions, and the second information processing device A(2) answers a part of the content of these two or more questions, and sends the question of the remaining part to a different information processing device (in the example of FIG. 1, the third information processing device A(3)).

The third information processing device A(3) receives the question data a(2) and the answer data b(2) transmitted from the second information processing device A(2).

The third information processing device A(3) transmits answer data b(3), which includes data expressing the content of an answer to the content of the question expressed by the received question data a(2), and question data a(3) according to the question data a(2) and the like, to the fourth information processing device A(4).

In the present embodiment, the question data a(3) includes information making it possible to specify a route along which to transmit the question data a(3). Also, in the present embodiment, the question data a(3) includes information specifying how to return an answer to the question data a(3).

Here, in the example of FIG. 1, the answer data b(3) is taken to include content that forms a part of an answer to the content of the question expressed by the question data a(2). Additionally, in the example of FIG. 1, the question data a(3) is taken to be data for asking for the remaining part or parts of the answer missing from the answer data b(3). In other words, in the example of FIG. 1, the content of the question expressed by the question data a(2) can be logically separated into the content of two or more questions, and the third information processing device A(3) answers a part of the content of these two or more questions, and sends the question of the remaining part to a different information processing device (in the example of FIG. 1, the fourth information processing device A(4)).

The answer data b(3) includes the content of the answer included in the answer data b(2), for example. In other words, the answer data b(3) includes the content of the answer by the second information processing device A(2) and the content of the answer by the third information processing device A(3).

The fourth information processing device A(4) to the (N-1)th information processing device A(N-1) perform operations similar to the third information processing device A(3).

In other words, the ith (where i = 4 to N-1) information processing device A(i) receives the question data a(i-1) and the answer data b(i-1) transmitted from the (i-1)th information processing device A(i-1). Also, the ith information processing device A(i) transmits answer data b(i), which includes data expressing the content of an answer to the content of the question expressed by the received question data a(i-1), and question data a(i) according to the question data a(i-1) and the like, to the (i+1)th information processing device A(i+1).

In the present embodiment, the question data a(i) includes information making it possible to specify a route along which to transmit the question data a(i). Also, in the present embodiment, the question data a(i) includes information specifying how to return an answer to the question data a(i).

Here, in the example of FIG. 1, the answer data b(i) is taken to include content that forms a part of an answer to the content of the question expressed by the question data a(i-1). Additionally, in the example of FIG. 1, the question data a(i) is taken to be data for asking for the remaining part(s) of the answer missing from the answer data b(i). In other words, in the example of FIG. 1, the content of the question expressed by the question data a(i-1) can be logically separated into the content of two or more questions, and the ith information processing device A(i) answers a part of the content of these two or more questions, and sends the question of the remaining part to a different information processing device (in the example of FIG. 1, the (i+1)th information processing device A(i+1)).

The answer data b(i) includes the content of the answer included in the answer data b(i-1), for example. In other words, the answer data b(i) includes the content of the answers by the second information processing device A(2) to the (i-1)th information processing device A(i-1) and the content of the answer by the ith information processing device A(i).

The Nth information processing device A(N) receives the question data a(N-1) and the answer data b(i-1) transmitted from the (N-1)th information processing device A(N-1).

The Nth information processing device A(N) transmits answer data b(N), which includes data expressing the content of an answer to the content of the question expressed by the received question data a(N-1), to the first information processing device A(1).

The answer data b(N) includes the content of an answer with respect to all of the content of the question expressed by the question data a(N-1). Additionally, the answer data b(N) includes the content of the answer included in the answer data b(N-1), for example. In other words, the answer data b(N) includes the content of the answers by the second information processing device A(2) to the (N-1)th information processing device A(N-1) and the content of the answer by the Nth information processing device A(N).

Here, the route along which the question data a(1) to the question data a(N-1) is transmitted is decided when the first information processing device A(1) sends the question, for example, and information specifying the route is included in the question data a(1). The information makes it possible for the second information processing device A(2) to the Nth information processing device A(N) to determine the route.

As an example, the process of logically separating the content of a single question into the content of a plurality of questions may be performed by the first information processing device A(1), and in this case, the content of the separated questions is included in the question data a(1).

As another example, the process of logically separating the content of a single question into the content of a plurality of questions may be performed by the second information processing device A(2) to the Nth information processing device A(N), for example.

Note that for each of i = 2 to (N-1), the ith information processing device A(i) may transmit the question data a(i) and the answer data a(i) simultaneously to the (i+1)th information processing device A(i+1), or transmit the question data a(i) and the answer data a(i) separately to the (i+1)th information processing device A(i+1). Here, an aspect in which the two pieces of data are transmitted simultaneously includes cases in which, strictly speaking, the two pieces of data are transmitted consecutively in time with a slight amount of time lag, for example.

Also, the present example illustrates a case in which, for each of i = 1 to (N-2), the content of the question expressed by the question data a(i) and the content of the question expressed by the question data a(i+1) are different, but the content of these questions may also have portions which are the same.

Also, the present example illustrates a case in which, for each of i = 2 to N, the ith information processing device A(i) answers the question of the received question data a(i-1), but in some cases, any one or more information processing devices A(i) may also transmit the question data a(i) expressing a question with the same content as the question expressed by the question data a(i-1) to the (i+1)th information processing device A(i+1), without answering the received question data a(i-1), for example. In this way, an information processing device A(i) that merely relays the question data a(i-1) and the answer data b(i-1) may also exist.

As above, in the example of FIG. 1, a route is formed such that answers (the answer data b(2) to b(N)) to a question is returned to the information processing device A(1) on a looping route that starts and ends at the first information processing device A(1). With this arrangement, the first information processing device A(1) is capable of receiving information expressing the content of the answers by all of the other information processing devices A(2) to A(N).

The example in FIG. 2 will be described.

Note that for convenience, FIG. 2 illustrates the same information processing system 1 as the one illustrated in FIG. 1, and the description references the same signs as those illustrated in FIG. 1.

In the example of FIG. 2, the route along which the question data a(1) to a(N-1) is transmitted is the same as the case illustrated in FIG. 1.

On the other hand, in the example of FIG. 2, the route along which the answer data a(2) to b(N) is transmitted is different from the case illustrated in FIG. 1.

The example of FIG. 2 illustrates a route on which, for i = 2 to N, the ith information processing device A(i) receiving the question data a(i-1) from the (i-1)th information processing device a(i-1) returns the answer data b(i) with respect to the question data i(i-1) directly to the (i-1)th information processing device A(i-1) that sent the question data a(i-1).

Specifically, the ith information processing device A(i) transmits, to the (i-1)th information processing device A(i-1), the answer data b(i) including the content of an answer to the question of the question data b(i-1) received from the (i-1)th information processing device A(i-1).

Also, for i = 2 to (N-1), the ith information processing device A(i) includes the content of the answer expressed by the answer data b(i+1) received from the (i+1)th information processing device A(i+1) in the answer data (i) transmitted from the device itself (the information processing device A(i)) to the (i-1)th information processing device A(i-1).

In this way, in the example of FIG. 2, a route is formed such that the second information processing device A(2), being a peer that communicates directly with the first information processing device A(1), returns all answers to the question (substantially, the answer data b(2) to b(N)) to the information processing device A(1). With this arrangement, the first information processing device A(1) is capable of receiving information expressing the content of the answers by all of the other information processing devices A(2) to A(N).

Here, the examples of FIGS. 1 and 2 illustrate cases in which the first information processing device A(1) transmits the question data a(1) to one other information processing device (the second information processing device A(2)), but as another example, the first information processing device A(1) may transmit question data in parallel to two or more other different information processing devices. In this case, the content of the question expressed by the question data transmitted to the two or more other different information processing devices may be the same or different, for example.

In such a case, the route becomes a route containing two or more separate route sections disposed in parallel at the start point of the route.

Furthermore, the examples of FIGS. 1 and 2 illustrate examples of routes in which the plurality of information processing devices A(1) to A(N) are arranged in series, but as another example, a route containing two or more separate route sections disposed in parallel at one or more of the start point, a midpoint, or the end point of the route may also be used. In other words, a route section branching out in parallel to two or more information processing devices from any of the information processing devices A(1) to A(N) may exist.

Also, the examples of FIGS. 1 and 2 illustrate cases in which a single information processing device A(i) for i = 2 to N is included as a node only one time along the route, but as another example, the same information processing device A(i) may be included as a node two or more times along the route.

Also, a route containing a route section that returns answers according to the method in the example of FIG. 1 and a route section that returns answers according to the method in the example of FIG. 2 may also be used.

Also, on a single route, each of the information processing devices A(i) for i = 2 to N may be set in any way to return an answer according to the method in the example of FIG. 1 or return an answer according to the method in the example of FIG. 2.

The example in FIG. 3 will be described.

In the present embodiment, a secondary route section refers to a route section that is not originally included on the route decided by the first information processing device A(1) from which the question originates, but is formed by one or more of the second and subsequent information processing devices A(2) to A(N). Additionally, secondary question data and answer data refers to question data and answer data that is produced on a secondary route section.

FIG. 3 illustrates an information processing device A(j) acting as any of j = 2 to N, and also illustrates information processing devices B(1) to B(2) and B(11) included on secondary route sections. These information processing devices B(1) to B(2) and B(11) have similar functions to the information processing device A(i), for example. Furthermore, these information processing devices B(1) to B(2) and B(11) may be considered to be provided in the information processing system 1, or may be considered not to be provided in the information processing system 1, for example.

The jth information processing device A(j) generates question data 21-1 in relation to some or all of the content of a question expressed by question data a(j-1) received from the (j-1)th information processing device A(j-1), and transmits the question data 21-1 to the information processing device B(1). The information processing device B(1) generates question data c(1) and answer data d(1) on the basis of the question data 21-1 received from the information processing device A(j), and transmits the question data c(1) and answer data d(1) to the information processing device B(2). The information processing device B(2) generates answer data d(2) on the basis of the question data c(1) received from the information processing device B(1), and transmits the answer data d(2) to the information processing device A(j).

Also, the jth information processing device A(j) generates question data 21-2 in relation to some or all of the content of a question expressed by the question data a(j-1) received from the (j-1)th information processing device A(j-1), and transmits the question data 21-2 to the information processing device B(11). The information processing device B(11) generates answer data d(11) on the basis of the question data 21-2 received from the information processing device A(j), and transmits the answer data d(11) to the information processing device A(j).

Here, in the example of FIG. 3, the information processing device A(j) decides secondary route sections and causes a question to be transmitted along the secondary route sections.

Note that the secondary route sections illustrated in FIG. 3 are explanatory examples, and any of various route sections may also be used. Secondary route sections may also be of various types, similarly to the route decided in the first information processing device A(1) from which the question originates.

The information processing devices B(1) to B(2) and B(11) included on the secondary route sections do not include the information processing devices A(2) to A(N) included on the route decided in the first information processing device A(1) from which the question originates, but as another example, a secondary route section may also include one or more of the information processing devices A(2) to A(N) in some cases.

In the example of FIG. 3, the jth information processing device A(j) may acquire the answer data d(2) and d(11) from the secondary route sections, and include some or all of the content of answers included in the answer data d(2) and d(11) on such secondary route sections in the answer data b(j) transmitted to the (j+1)th information processing device A(j+1). Note that in some cases, the jth information processing device A(j) may also not include the content of answers included in the answer data d(2) and d(11) on the secondary route sections in the answer data b(j) transmitted to the (j+1)th information processing device A(j+1).

Note that the process by which the information processing device A(j) sends a question and receives an answer on a secondary route section may be performed according to a method similar to the process by which the first information processing device A(1) sends a question and receives an answer on the route, or may be performed according to any different method.

In this way, on a route according to an example such as the example of FIG. 1 or 2, one or more secondary route sections like those in the example of FIG. 3 may occur.

The process by which the information processing device A(j) forms a secondary route section and transmits a question and an answer is performed autonomously by the information processing device A(j), for example. In this case, the information processing device A(j) autonomously forms a secondary route section and attempts to increase the content of the answer obtained in the information processing device A(j), without a secondary route section being designated or the like by the first information processing device A(1) from which the question originates, for example.

Note that a secondary route section may be considered to be included on the route decided in the first information processing device A(1) from which the question originates, or may be considered to be a separate route section not included on the route, for example.

Also, an aspect may be used in which the first information processing device A(1) from which the question originates manages (ascertains) the existence of a secondary route section, or an aspect may be used in which the first information processing device A(1) does not manage (ascertain) the existence of a secondary route section, for example.

Also, the example of FIG. 3 illustrates a case in which the information processing devices B(1), B(2), and B(11) are included on secondary route sections formed by the information processing device A(j), but as another example, one or more devices other than the information processing devices may also be included on a wavelike route section. For example, a device of a search engine or the like may be used as such a device. As an example, the information processing device A(j) may access the device of a search engine or the like to send a question and acquire a search result with respect to the question as an answer to the question.

### Overview of information processing device

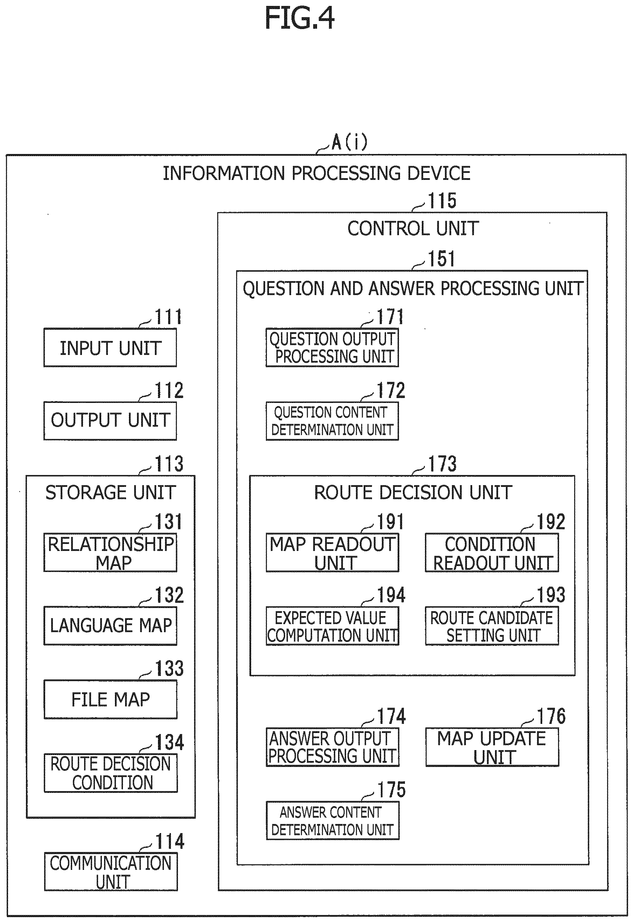

FIG. 4 is a diagram illustrating a schematic configuration example of the information processing device A(i) according to an embodiment of the present invention. In the description of FIG. 4, i is an integer value from 1 or greater to N or less.

Here, in the present embodiment, the N information processing devices A(1) to A(N) are taken to have the same functions, and will be collectively referred to as the information processing devices A(i) in some cases. Also, in the present embodiment, the information processing devices B(1), B(2), and B(11) in the example of FIG. 3 also have the same functions as the information processing devices A(i).

In the present embodiment, for all of the N information processing devices A(1) to A(N), a predetermined program (computer program) is installed in each of the information processing devices A(1) to A(N), and various operations are performed in accordance with the program. In the present embodiment, the program is a common program shared in common by the N information processing devices A(1) to A(N). Note that a common program in the present embodiment refers to a program having substantially the same functions, and in some cases, the format of the program or the like may be different to match differences in the models of each of the information processing devices A(1) to A(N).

The information processing device A(i) is provided with an input unit 111, an output unit 112, a storage unit 113, a communication unit 114, and a control unit 115.

The control unit 115 is provided with a question and answer processing unit 151.

The question and answer processing unit 151 is provided with a question output processing unit 171, a question content determination unit 172, a route decision unit 173, an answer output processing unit 174, an answer content determination unit 175, and a map update unit 176.

The route decision unit 173 is provided with a map readout unit 191, a condition readout unit 192, a route candidate setting unit 193, and an expected value computation unit 194.

Here, an example is given in which the question and answer processing unit 151 and the function units provided in the question and answer processing unit 151 are distinguished for convenience, but the function units illustrated in the present embodiment do not necessarily have to be distinguished.

In the present embodiment, with regard to the signs (171 to 176 and 191 to 194) of the question and answer processing unit 151 and the function units provided in the question and answer processing unit 151, the same signs are used to describe the N information processing devices A(1) to A(N) for convenience.

The input unit 111 inputs data or information from external sources.

As an example, the input unit 111 is provided with an operation unit that is operated by a user (person), and inputs information according to an operation performed on the operation unit by the user. The operation unit may be a device such as a keyboard or a mouse, for example.

As another example, the input unit 111 may input information that is output from an external device. The external device may be a portable recording medium (storage medium) such as Universal Serial Bus (USB) memory, for example.

The output unit 112 outputs data or information externally.

As an example, the output unit 112 may be provided with a display unit that outputs by displaying information to a user. The display unit may be a device such as a liquid crystal panel, for example. As another example, the output unit 112 may be provided with a sound output unit that outputs information as sound to a user. The sound output unit may be a device such as a speaker, for example.

As another example, the output unit 112 may output information to an external device. The external device may be a portable recording medium, for example.

Note that the operation unit provided in the input unit 111 and the display unit provided in the output unit 112 may also be combined as a touch panel, for example. In this case, the function of the operation unit is achieved by a function of inputting information in accordance with an operation by a user depending on a state of the touch panel being touched by the user, while the function of the display unit is achieved by a function of outputting by displaying information to the user on the touch panel.

The storage unit 113 stores various data or information.

For example, the storage unit 113 stores a relationship map 131, a language map 132, a file map 133, and a route decision condition 134.

The communication unit 114 communicates with the other information processing devices A(k). Here, k is an integer value from 1 or greater to N or less, and is a value different from i.

Also, the communication unit 114 communicates with the server device 11 over a wired or wireless network 21.

In the present embodiment, information that specifies (identifies) each device (also referred to as "device specifying information" for convenience) is set in each of the information processing devices A(1) to A(N) and the server device 11. The communication unit 114 communicates with other devices using the device specifying information as source information or destination information, for example.

In the present embodiment, the communication unit 114 includes the function of a receiving unit that receives a signal from another device and the function of a transmitting unit that transmits a signal to another device.

Note that the reception function of the communication unit 114 may also be integrated with the function of the input unit 111, for example, but is distinguished in the present embodiment for convenience.

Similarly, the transmission function of the communication unit 114 may also be integrated with the function of the output unit 112, for example, but is distinguished in the present embodiment for convenience.

The control unit 115 includes a central processing unit (CPU), for example, and performs various processes by executing a predetermined program. The program may be stored in the storage unit 113, for example.

The question and answer processing unit 151 executes various processes related to questions and answers.

In the present embodiment, the control unit 115 controls general processing in the information processing device A(i), but for convenience, the function unit that performs processes related to questions and answers is illustrated as the question and answer processing unit 151.

The question output processing unit 171 performs processes related to the output of question data. One example of output is transmission.

The question output processing unit 171 performs processes such as a process of receiving the content of a question, a process of generating question data, and a process of outputting question data, for example.

In the present embodiment, question data includes information that specifies a route along which the question data is to be transmitted and information specifying how to return answer data with respect to the question data (for example, a method of returning answer data directly or a method of returning answer data indirectly). Note that in the case in which some or all of the information included in the question data in the present embodiment is transmitted by another method (that is, a method other than question data), the information does not have to be included in the question data.

The question content determination unit 172 performs processes related to the determination of the content of a question.

For example, the question content determination unit 172 performs a process of determining the content of a question expressed by question data.

The route decision unit 173 performs processes related to deciding a route.

For example, the route decision unit 173 performs a process of deciding a route along which to transmit question data.

Also, the route decision unit 173 performs a process of deciding a route along which to transmit answer data, for example.

In the route decision unit 173, the map readout unit 191 performs a process of reading out a map stored in the storage unit 113. In the present embodiment, the relationship map 131, the language map 132, and the file map 133 exist as maps. Note that the map readout unit 191 may also read out a map obtained from a source other than the storage unit 113 in some cases.

In the route decision unit 173, the condition readout unit 192 performs a process of reading out a predetermined condition stored in the storage unit 113. In the present embodiment, the route decision condition 134 exists as the predetermined condition. Note that the condition readout unit 192 may also read out a condition obtained from a source other than the storage unit 113 in some cases.

In the route decision unit 173, the route candidate setting unit 193 performs a process of setting a route candidate. Here, a route candidate refers to a route provisionally set as a candidate for deciding the route to adopt.

In the route decision unit 173, the expected value computation unit 194 performs a process of computing a predetermined expected value for a route candidate.

The route decision unit 173 decides the route to adopt on the basis of the expected value computed for each route candidate.

The answer output processing unit 174 performs processes related to the output of answer data. One example of output is transmission.

The answer output processing unit 174 performs processes such as a process of receiving the content of an answer, a process of generating answer data, and a process of outputting answer data, for example.

The answer content determination unit 175 performs processes related to the determination of the content of an answer.

For example, the answer content determination unit 175 performs a process of determining the content of an answer expressed by answer data.

For example, the answer content determination unit 175 may determine whether or not the content of an answer expressed by answer data is adequate, adopting the content of the answer in the case of determining that the answer is adequate, and not adopting the content of the answer in the case of determining that the answer is inadequate. In the case in which the content of the answer is not adopted, the question and answer processing unit 151 may perform a process of changing how a question is asked and outputting question data again, for example.

Here, any method may be used as the method of determining whether or not the content of an answer expressed by answer data is adequate. For example, a method may be used in which the content of the answer is expressed as a numerical value, and the answer is determined to be adequate if the numerical value is equal to or greater than a predetermined threshold value. Note that herein, the numerical value is assumed to be a value such that a larger value indicates an answer with more complete content. As another example, the numerical value may be a value such that a smaller value indicates an answer with more complete content, and in this case, the answer is determined to be adequate if the numerical value is less than or equal to a predetermined threshold value.

Also, any aspect may be used as the aspect of changing how a question is asked. For example, an aspect that changes the route along which the question data is transmitted or an aspect that changes the content of the question may be used.

As the aspect of changing the route along which the question data is transmitted, one or more of an aspect of increasing the number of other information processing devices (also referred to as the "number of layers" for convenience) that pass the question data directly from the originating information processing device, an aspect that causes a different information processing device to be newly included on the route, an aspect that increases the number of information processing devices included on the route, an aspect that tentatively includes an information processing device with a low degree of correlation (correlation value) on the route, or the like may be used.

Any aspect may be used as the aspect of changing the content of the question, and an aspect such as an aspect that changes the content of the question to the content of a question from a different perspective or an aspect that changes the format of the question may be used.

Note that any format may be used as the format of the question. For example, the format may be the format of a yes or no question answered with YES (positive) or NO (negative), a format of a multiple-choice question in which one or more choices are selected from among a plurality of choices, or the format of what is called a fill-in-the-blank question that is answered by entering information into one or more blank fields.

The map update unit 176 is capable of updating the map of each of the relationship map 131, the language map 132, and the file map 133. Here, the map update unit 176 may update each map by machine learning, for example. Any method of machine learning may be used. As another example, the map update unit 176 may update each map on the basis of content designated by the user or another device.

For example, in the case in which the relationship map 131 stores correspondence relationships between information that is variable in real time and the information processing devices A(i), the map update unit 176 may update, in real time, such information that is variable in real time. The information that is variable in real time may be, for example, information about the positions of the information processing devices A(i), information such as the atmospheric temperature or atmospheric humidity at the places where the information processing devices A(i) exist, information about the movement speeds of the information processing devices A(i), and time information.

Note that a configuration may also be used in which the map update unit 176 does not update some or all of the relationship map 131, the language map 132, and the file map 133. For example, in the case in which none of the maps is updated, the map update unit 176 does not have to be provided in the information processing devices A(i).

### Questions and answers

In the present embodiment, on the basis of a question issued from the originating information processing device A(1), the question or a question related to the question is transmitted to the other information processing devices A(2) to A(N) included on a route. The other information processing devices A(2) to A(N) send answers to the received question to the originating information processing device A(1), directly or indirectly.

The content of the question issued from the originating information processing device A(1) may also be converted to the content of a different question in any of the information processing devices A(2) to A(N-1) while being transmitted along the route.

Also, any of the information processing devices A(2) to A(N) may independently form a secondary route section and collect information from the secondary route section.

In such a process, in the present embodiment, questions are transmitted as question data, and answers are transmitted as answer data.

### Relationship map, language map, file map

In the present embodiment, each of the relationship map 131, the language map 132, and the file map 133 stores a plurality of information and correlation values of the plurality of information in association with each other.

In the present embodiment, among the relationship map 131, the language map 132, and the file map 133, one or both of the language map 132 and the file map 133 do not have to be provided.

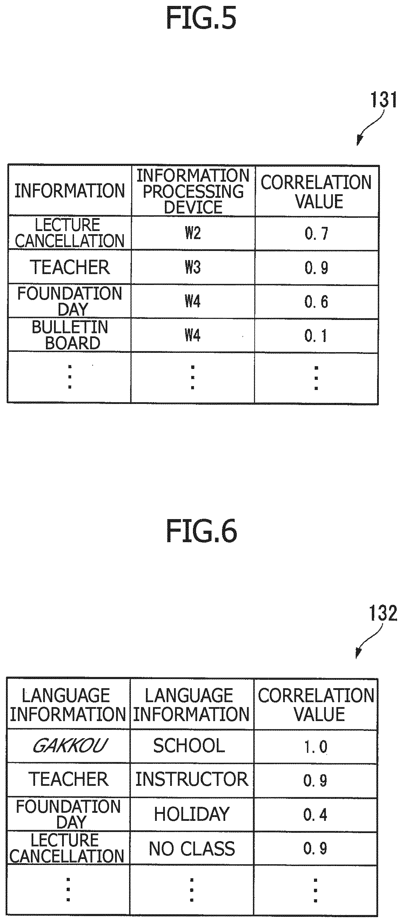

FIG. 5 is a table illustrating an example of the relationship map 131 according to an embodiment of the present invention.

The relationship map 131 is a map that defines the relation between information and the information processing devices A(i).

In this example, the relationship map 131 stores "information", an "information processing device", and a "correlation value" in association with each other.

In the "information" field, any information may be stored. For example, any kind of sign, word, sentence, or the like may be stored, and attributes such as a name, age, address, and position may also be stored, for example. Also, in the "information" field, a combination of two or more pieces of information of one type, such as signs, words, sentences, names, ages, addresses, and positions may be stored, or a combination of two or more pieces of information including two or more of these types may be stored, for example, and such combinations may be expressed as a vector for example.

In the "information processing device" field, information specifying one of the information processing devices A(i) is stored. Each information processing device A(i) may be specified by using device specifying information such as a number, for example.

In the "correlation value" field, a value expressing the degree of correlation between the "information" and "information processing device" fields is stored. In the present example, the correlation values are defined such that a lower value indicates a lower degree of correlation and a higher value indicates a higher degree of correlation, but this relationship may also be reversed. Also, in the present example, the correlation values are taken to be values from 0 or greater to 1 or less.

In the example of FIG. 5, as examples of the correspondence between the "information", "information processing device", and "correlation value" fields, examples such as a correspondence relationship between "lecture cancellation", "W2", and "0.7" and a correspondence relationship between "teacher", "W3", and "0.9" are stated.

Here, the information such as "W2" and "W3" is information that specifies a specific information processing device A(i) (device specifying information).

Note that in the present example, the "correlation value" is stored in the relationship map 131, but as another example, the relationship map 131 may not be provided with the "correlation value" field. In such a configuration, the "correlation value" may be treated as a fixed value (such as 1, for example) for all correspondence relationships, for example.

It is also possible to treat the correlation value as expressing the trustworthiness (reliability) of an answer.

Here, in the present embodiment, each information processing device A(i) is assumed to be operated by a specific user (person), and in this case, the relationship map 131 defines the relationship between the information and the user (the user corresponding to the information processing device).

Note that as another example, in the case in which two or more different users log in under separate usernames to use a single information processing device A(i), in the relationship map 131, the information in the "information processing device" field may be stated so as to individually distinguish between these users, or the information in the "information processing device" field may be stated in units of the common information processing device A(i) without distinguishing between these users, for example.

Also, the present example illustrates a case of using the relationship map 131 that associates the "information", "information processing device", and "correlation value" fields, but as another example, a relationship map that associates "information", "user", and "correlation value" fields may also be used. In the "user" field, each user is specified.

Note that the content of the relationship map 131 illustrated in the example of FIG. 5 is an example for convenience, and various content may be used.

FIG. 6 is a table illustrating an example of the language map 132 according to an embodiment of the present invention.

The language map 132 is a map that defines the same kinds of words, and associates differently worded expressions as having the same meaning, for example. Cases of "having the same meaning" may also include cases of "having similar meaning", for example.

In the present example, in the language map 132, one piece of "language information", another piece of "language" information, and a "correlation value" are stored in association with each other.

In each of the two "language information" fields, any information may be stored. For example, information such as words or phrases are stored.

In the "correlation value" field, a value expressing the degree of correlation between one piece of "language information" and the other piece of "language information" is stored. In the present example, the correlation values are defined such that a lower value indicates a lower degree of correlation and a higher value indicates a higher degree of correlation, but this relationship may also be reversed. Also, in the present example, the correlation values are taken to be values from 0 or greater to 1 or less.

In the example of FIG. 6, as examples of the correspondence between the one piece of "language information", the other piece of "language information", and the "correlation value", examples such as a correspondence relationship between *"gakkou",* "school", and "1.0" and a correspondence relationship between "teacher", "instructor", and "0.9" are stated.

Note that in the present example, "*gakkou*" and "school" have a correspondence relationship between Japanese and English, and are expected to be treated as having the same meaning.

Also, in the present example, "teacher" and "instructor" have a synonymous relationship, and are expected to be treated as having the same meaning in many situations.

Note that in the present example, the "correlation value" is stored in the language map 132, but as another example, the language map 132 may not be provided with the "correlation value" field. In such a configuration, the "correlation value" may be treated as a fixed value (such as 1, for example) for all correspondence relationships, for example.

It is also possible to treat the correlation value as expressing the trustworthiness (reliability) of an answer.

Note that the content of the language map 132 illustrated in the example of FIG. 6 is an example for convenience, and various contents may be used.

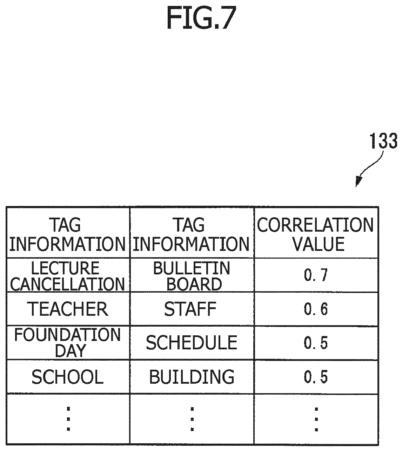

FIG. 7 is a table illustrating an example of the file map 133 according to an embodiment of the present invention.

The file map 133 is a map that defines the relation between information.

In the present example, in the file map 133, one piece of target information called "tag information", another piece of target information called "tag information", and a "correlation value" are stored in association with each other.

In each of the two "tag information" fields, any information may be stored. For example, information such as any sign, a word, a sentence, any attribute, a name of file data, or file data (the content of the data itself) may be stored. Also, in these "tag information" fields, a combination of two or more pieces of information of one type, such as signs, words, sentences, attributes, names of file data, or file data (the content of the data itself) may be used, or a combination of two or more pieces of information including two or more of these types may be used, for example, and such combinations may be expressed as a vector for example.

In the "correlation value" field, a value expressing the degree of correlation between one piece of "tag information" and the other piece of "tag information" is stored. In the present example, the correlation values are defined such that a lower value indicates a lower degree of correlation and a higher value indicates a higher degree of correlation, but this relationship may also be reversed. Also, in the present example, the correlation values are taken to be values from 0 or greater to 1 or less.

In the example of FIG. 7, as examples of the correspondence between the one piece of "tag information", the other piece of "tag information", and the "correlation value", examples such as a correspondence relationship between "lecture cancellation", "bulletin board", and "0.7" and a correspondence relationship between "teacher", "staff", and "0.6" are stated.

For example, "lecture cancellation" and "bulletin board" have different meanings, but in the present example, information about a "lecture cancellation" of a class at a school is expected to be posted on a "bulletin board", and therefore a relationship between these pieces of information is defined.

Similarly, "staff is not necessarily limited to "teacher", but in the present example, the "staff" at a school is expected to also refer to "teacher", and therefore, a relationship between these pieces of information is defined.

As another example, one or both of the one piece of "tag information" and the other piece of "tag information" associated with each other may be file data (the content of the data itself). The file data may be data such as class schedule data or enrollment data for students at a school, for example.

Note that in the present example, the "correlation value" is stored in the file map 133, but as another example, the file map 133 may not be provided with the "correlation value" field. In such a configuration, the "correlation value" may be treated as a fixed value (such as 1, for example) for all correspondence relationships, for example.

It is also possible to treat the correlation value as expressing the trustworthiness (reliability) of an answer.

Note that the content of the file map 133 illustrated in the example of FIG. 7 is an example for convenience, and various contents may be used.

Here, in the language map 132, in the case in which two pieces of language information associated with each other can be respectively expressed by vectors, a correlation value of the two vectors expressing the two pieces of language information may be used as the correlation value of the two pieces of language information. For example, a value corresponding to the distance between the two vectors (the length of the difference vector) may be used as the correlation value.

As an example, in the case in which the language information is words, it is possible to use a vector in which the presence or absence (for example, 1 in the case of presence and 0 in the case of absence) of two or more words are arranged (value of word 1, value of word 2, value of word 3, ...).

Similarly, in the file map 133, in the case in which two pieces of tag information associated with each other can be respectively expressed by vectors, a correlation value of the two vectors expressing the two pieces of tag information may be used as the correlation value of the two pieces of tag information. For example, a value corresponding to the distance between the two vectors (the length of the difference vector) may be used as the correlation value.

As an example, in the case in which the tag information is sentences, it is possible to use a vector in which the numbers of times two or more words appear in the sentence are arranged (number of times word 1 appears, number of times word 2 appears, number of times word 3 appears, ...).

As a specific example, an example of evaluating according to the degree of frequency of words will be described.

Suppose the following two sentences exist.

Sentence A is "John likes to watch movies. Mary likes to watch movies too."

Sentence B is "John also likes to watch football games."

Suppose that the frequency of occurrence of each word (John, likes, to, watch, movies, Mary, too, also, football, games) is treated as a vector. Note that here, the number of times a word appears is used as the frequency of occurrence.

The vector for sentence A is (1, 2, 2, 2, 2, 1, 1, 0, 0, 0).

The vector for sentence B is (1, 1, 1, 1, 0, 0, 0, 1, 1, 1).

As the value (correlation value) expressing the similarity between these two vectors, the value of the cos (cosine similarity) can be used, for example.

Here, in the present embodiment, the semantic relationship between information is managed by the language map 132, while all other types of relationship between information are managed by the file map 133.

Note that the terms "relationship map", "language map", "file map", "language information", and "tag information" are used for convenience, and may also be referred to by different names.

In the present embodiment, the relationship map 131, the language map 132, and the file map 133 are stored in the storage unit 113 for each of the information processing devices A(i).

The relationship map 131, the language map 132, and the file map 133 may also be set, updated, or the like for each of the information processing devices A(i), and may be different for each of the information processing devices A(i).

As another example, one or more of the relationship map 131, the language map 132, and the file map 133 may be controlled to have the same content for two or more predetermined information processing devices A(i), and may be controlled to have the same content for all of the information processing devices A(1) to A(N), for example. Such control may be control in which one predetermined information processing device A(i) designates or allows changes to the maps, or control in which each of the information processing devices A(i) whose maps should contain the same content notifies the other information processing devices A(i) of the content of a change in its own maps, and causes the other information processing devices A(i) to change their maps in the same way.

Also, as another example, a portion of the map in one or more of the relationship map 131, the language map 132, and the file map 133 may be controlled to have the same content for two or more predetermined information processing devices A(i), and may be controlled to have the same content for all of the information processing devices A(1) to A(N), for example.

In other words, in one or more of the relationship map 131, the language map 132, and the file map 133, a single map may have a common portion and an individual portion. The common portion of the map is controlled to have the same content in two or more predetermined information processing devices A(i), while the individual portion of the map may have different content for each of the information processing devices A(i). The common portion of a single map may be stored in a device such as a server device shared in common by the plurality of information processing devices A(1) to A(N) (in the examples of FIGS. 1 and 2, the server device 11) and shared by the plurality of information processing devices A(1) to A(N), for example.

The common portion of a map may also be shared in common within a predetermined organization, any predetermined group, or a predetermined geographical area or the like, for example.

Also, for one or more of the relationship map 131, the language map 132, and the file map 133, some or all of the map used by the information processing devices A(i) may also be stored in a storage unit of another device. The other device may be an information processing device (k) other than the information processing devices A(i), or may be the server device 11, for example. The information processing devices A(i) access the other device to acquire and use some or all of the information in the map stored in the storage unit of the other device.

As an example, the common portion of a map used by the information processing devices A(i) may be stored in the storage unit of another device and be shared by two or more predetermined information processing devices A(i), whereas the individual portion of the map may be stored in the storage unit 113 of each information processing device A(i) for each information processing device A(i).

Also, for one or more of the relationship map 131, the language map 132, and the file map 133, control may be performed to limit the scope of peers (for example, other devices) to which the information stored in the map of a certain information processing device A(i) is disclosed (hereinafter also referred to as the "disclosure peer scope" for convenience).

Also, for one or more of the relationship map 131, the language map 132, and the file map 133, control may be performed to limit the scope of information disclosed to another entity (for example, another device) from among the information stored in the map of a certain information processing device A(i) (hereinafter also referred to as the "disclosed information scope" for convenience).

Here, the disclosure peer scope or the disclosed information scope may be set, updated, or the like for each relevant information processing device A(i), or may be set, updated, or the like for each relevant user, for example. Note that in the case in which the information processing devices A(i) and the users correspond to each other in a 1:1 relationship, the result is the same with respect to each information processing device A(i) or with respect to each user.

According to such a configuration, a relevant user (the user himself or herself) is able to set, for each peer or for each piece of information, whether or not to disclose attribute information related to the user, such as the user's name (identity), address, and age, for example. Such limiting of the disclosure peer scope or the disclosed information scope makes it possible to protect privacy.

Also, for one or more of the relationship map 131, the language map 132, and the file map 133, a period of validity may be set on the information about an association in the map. Here, the association is the association between the information, the information processing device, and the correlation value in the relationship map 131, the association between the language information, the language information, and the correlation value in the language map 132, or the association between the tag information, the tag information, and the correlation value in the file map 133.

The question and answer processing unit 151 may also have a function of setting a predetermined period of validity on each association, and when the predetermined period of validity expires from the time at which the information about the association was registered in the map, removing the information about the association from the map.

Any length of time may be set as the period of validity. For example, the period of validity for a statement related to a school or a workplace may be set to one year (for example, a period starting at the beginning of April and ending at the end of March), whereas the period of validity for a statement related to a real-time traffic scene may be set to a few seconds (a length of time during which the traffic conditions are treated as mostly the same before changing).

In addition, periods of validity having different lengths may be set for each type of association.

Also, depending on the type of association, a period of validity may be set in some cases and not set in other cases.

### Process of updating correlation values in relationship map

When the map update unit 176 is holding information about a combination of a question and an answer, the map update unit 176 may use the information to update the correlation values in the relationship map 131.

For example, the map update unit 176 transmits question data expressing the content of a question for which the map update unit 176 has information about the content of the answer (that is, the content of the answer is understood) to any information processing device A(k), and receives answer data with respect to the question data from the information processing device A(k). Thereafter, the map update unit 176 compares the already-understood content of the answer to the content of the answer included in the answer data received in response to the question data sent to the information processing device A(k), and thereby determines the similarity (for example, a correlation value) between the answers. With this arrangement, the map update unit 176 computes a correlation value regarding an association between the information processing device A(k) and information related to the question sent to the information processing device A(k). Note that in the case in which the contents of the answers match, the correlation value may be treated as 1.

Also, in the case in which the map update unit 176 has information about the content of an answer to a question (that is, the content of the answer to the question is understood), the map update unit 176 treats the answer as the correct answer, for example, but as another example, in the case in which the answer to the question is not understood, the map update unit 176 may treat an answer with the content returned the most number of times (the content of an answer determined by majority decision) as the correct answer on the basis of answers obtained with respect to the question.

With regard to the association between information and the information processing device A(k), in the case in which an association not stored in the relationship map 131 is detected, the map update unit 176 newly registers the association and the correlation value in the relationship map 131.

Also, in the case in which new information about an association already stored in the relationship map 131 is detected, the map update unit 176 registers the association and the correlation value in the relationship map 131 by overwriting.

Through such a process, the map update unit 176 is capable of registering a new association in the relationship map 131 when such a new association occurs, for example, and is also capable of updating the relationship map 131 with changed information when information related to an already registered association is changed, for example.

### Process of updating real time variable values in relationship map

In the case in which the relationship map 131 stores an association between a value that may vary in real time, such as the position or speed of the information processing device A(i), or the time (in the present embodiment, also referred to as a "real time variable value" for convenience) and the information processing device A(i), the map update unit 176 can change the real time variable value in real time, for example. Here, the process of updating in real time may also be a process of updating on a predetermined time interval that may be substantially considered to be real time, for example.

As an example, the map update unit 176 acquires information about a real time variable value at timings such as at predetermined intervals, and uses the acquired information to update a real time variable value stored in the relationship map 131. This arrangement makes it possible to accommodate cases in which information such as a real time position is necessary, like a process performed while a vehicle such as an automobile is traveling, for example.

### Route decision condition

The route decision condition 134 is a condition related to deciding a route, and any condition may be set.

For example, the route decision condition 134 may include a condition on generating a route candidate.

Here, the condition on generating a route candidate may include one or more conditions such as a condition on the number of information processing devices A(i) which may be included in a route candidate, a condition on an attribute of the information processing devices A(i) which may be included in a route candidates, a condition on whether or not to generate a route used in the past as a candidate, a condition on the topology of the route candidate, a condition on how to return an answer to the origin of a question, a condition on the number of route candidates, a condition on using a predetermined rule for generating a route candidate, a condition on generating a random route candidate, a condition on allowing a secondary route section, and a condition on not allowing a secondary route section.

Note that the number of information processing devices A(i) which may be included in a route candidate may be set on the basis of the format of the question, for example. For example, the number may be increased for a question format having three or more choices compared to a question format that is answered with YES or NO. Also, for example, the number may be increased for a fill-in-the-blank question format compared to a yes-or-no question format or a multiple-choice question format.

Furthermore, as the condition on generating a route candidate, a condition such as a condition on generating a route candidate for which a complete answer to the question is expected to be obtained or a condition on generating a route candidate for which an answer equal to or greater than a predetermined ratio less than 100% with respect to the question may be used, for example.

The designation of the topology of the route candidate may be a condition such as a condition on using a topology in which two or more information processing devices A(i) are arranged in series, a condition on using a topology in which two or more information processing devices A(i) are arranged in parallel, a condition on not using a topology in which two or more information processing devices A(i) are arranged in parallel, or a condition on using any kind of topology, for example.

As the condition on how to return an answer to the question origin, a condition such as a condition on returning an answer indirectly to the origin of a question on a looping topology (see FIG. 1 for example; however, the answer is returned directly from the last information processing device A(N) to the first information processing device A(1)) or a condition on returning an answer directly to the origin of a question (see FIG. 2, for example) may be used.

The route decision condition 134 may also include a condition on computing an expected value of a route candidate, for example.

In the present embodiment, the correlation value is used to compute the expected value.

First, the expected value will be described for the case in which the peer that sends a question from the question origin and requests an answer is a single information processing device A(i). In this case, the expected value computation unit 194 computes the expected value on the basis of the content of the relationship map 131, for example.

As an example, on the basis of the associated combination of "information", "information processing device", and "correlated value" contained in the relationship map 131, in the case in which the information processing device A(i) stated in the "information processing device" field is asked a question regarding the information stated in the "information" field, the expected value computation unit 194 treats a value according to the correlation value stated in the "correlation value" field as the expected value. The value according to the correlation value may be the correlation value itself or the value of a result obtained by multiplying the correlation value by a predetermined weighting factor, for example.

As a specific example, in the example of FIG. 5, in the case in which the information processing device A(i) specified by "W2" is asked a question regarding "lecture cancellation", the expected value computation unit 194 treats the expected value as 0.7. Also, in the case in which the information processing device A(i) specified by "W3" is asked a question regarding "teacher", the expected value computation unit 194 treats the expected value as 0.9.

The weighting factor may be set using any basis. For example, in the case in which two information processing devices A(i) are related, a weighting factor that increases in reverse proportion to the distance between the two information processing devices A(i) may be used, or a weighting factor that increases in reverse proportion to the difference in the times when information related to the two information processing devices A(i) was obtained may be used, for example.

Here, in the case in which the language map 132 is used, the expected value computation unit 194 may perform a computation that adjusts the computed expected value on the basis of the content of the language map 132.

For example, in the case in which the information processing device A(i) included on a route transmits, to another information processing device A(k), question data in which certain language information included in the content of the question has been replaced with other language information, the correlation value of an answer portion with respect to the question data may be multiplied by a predetermined weighting factor according to the replacement. In other words, a correlation value or the like for the replacement of language information may also be treated as the weighting factor. The weighting factor may be a value less than or equal to 1, for example.

As a specific example, in the case in which the content of a question containing the language information "teacher" is converted to the content of a question in which the "teacher" portion has been replaced with the language information "instructor", and question data expressing the changed content of the question is generated, the correlation value of the answer portion with respect to the question data may be multiplied by a weighting factor such as "0.9", which is the correlation value prescribed in the language map 132.

In other words, because converting the language information contained in the content of a question on the basis of the language map 132 may conceivably lower the correlation relationship with respect to the original question, the correlation value of the answer portion with respect to such a converted question may also be lowered.

Any method may be used as the method of adjusting the correlation value in the case in which language information is converted on the basis of the language map 132 and consequently adjusting the expected value of a route as a result in this way. For example, a formula for adjusting the correlation value may be set in advance.

Note that an aspect may also be used in which the correlation value is not adjusted and the expected value of the route is not adjusted, even if language information is converted on the basis of the language map 132.

Here, in the case in which the file map 133 is used, the expected value computation unit 194 may perform a computation that adjusts the computed expected value on the basis of the content of the file map 133.

For example, in the case in which the information processing device A(i) included on a route transmits, to another information processing device A(k), question data in which certain tag information included in the content of the question has been replaced with other tag information, the correlation value of an answer portion with respect to the question data may be multiplied by a predetermined weighting factor according to the replacement. In other words, a correlation value or the like for the replacement of tag information may also be treated as the weighting factor. The weighting factor may be a value less than or equal to 1, for example.

As a specific example, in the case in which the content of a question containing the tag information "lecture cancellation" is converted to the content of a question in which the "lecture cancellation" portion has been replaced with the tag information "bulletin board", and question data expressing the changed content of the question is generated, the correlation value of the answer portion with respect to the question data may be multiplied by a weighting factor such as "0.7", which is the correlation value prescribed in the file map 133.

In other words, because converting the tag information contained in the content of a question on the basis of the file map 133 may conceivably lower the correlation relationship with respect to the original question, the correlation value of the answer portion with respect to such a converted question may also be lowered.

Any method may be used as the method of adjusting the correlation value in the case in which tag information is converted on the basis of the file map 133 and consequently adjusting the expected value of a route as a result in this way. For example, a formula for adjusting the correlation value may be set in advance.

Note that an aspect may also be used in which the correlation value is not adjusted and the expected value of the route is not adjusted, even if tag information is converted on the basis of the file map 133.

Next, the expected value of a route containing two or more information processing devices A(i) will be described. The expected value is a comprehensive expected value for the route.

Note that in the case in which the same information processing device A(i) on a single route provides answers M times, where M is two or more times, the route may be treated as containing M information processing devices A(i), the correlation value may be multiplied by a weighting factor smaller than 1 for the second and subsequent answers, the second and subsequent answers may be treated as non-existent, or the correlation value may be computed by another method, for example.

The expected value of a route containing two or more information processing devices A(i) is treated as the expected value for the case in which the peers that send a question from the question origin and request an answer are two or more information processing devices A(i).

Here, any method of computing the expected value of the route may be used, and the method is preset in the route decision condition 134, for example. The method of computing the expected value of the route may also be expressed using a formula that computes the expected value, for example.

As an example, the value of the result of averaging the respective correlation values from two or more information processing devices A(i) included on the route may be treated as the expected value of the route. Note that a sum may also be used instead of an average.

As another example, the value of the result of calculating a weighted average of the respective correlation values from two or more information processing devices A(i) included on the route may be treated as the expected value of the route. The weighting is performed by multiplying each correlation value by a corresponding weighting factor, for example. Note that a sum may also be used instead of an average.

Also, the formula is not limited to the above, and any of various formulas may be used to compute the expected value of the route.

The route decision condition 134 may also include a condition on deciding which route to adopt from among route candidates, for example.

Any condition may be used as the condition on deciding which route to adopt from among route candidates.

For example, as the condition on deciding which route to adopt from among route candidates, a condition on deciding which route to adopt on the basis of the expected value may be used, such as a condition on deciding to adopt the route candidate having the maximum expected value, a condition on deciding to adopt the route candidate having the minimum expected value, a condition on deciding to adopt the route candidate having the median expected value (or a value close to the median), a condition on deciding to stop the route candidates whose expected value has a predetermined rank among the route candidates, a condition on deciding to adopt the route candidate whose expected value is equal to or greater than a predetermined threshold value, or a condition on deciding to adopt the route candidate whose expected value is equal to or less than a predetermined threshold value.

Also, as the condition on deciding which route to adopt from among route candidates, a condition such as a condition on preferentially adopting a route containing a specific information processing device A(j) or a condition on preferentially adopting a route containing an information processing device A(i) having a predetermined attribute may be used, for example.

Also, as the condition on deciding which route to adopt from among route candidates, a condition on deciding to adopt a route selected randomly from among the route candidates may be used, for example.

Also, as the condition on deciding which route to adopt from among route candidates, two or more different conditions may be used to decide to adopt a route that satisfies the two or more different conditions, for example.

From among the route candidates set by the route candidate setting unit 193, the route decision unit 173 determines which route to adopt on the basis of the route decision condition 134.

Note that the number of route candidates is multiple, for example, but may also be one in some cases.

Also, in the present example, it is anticipated that the information held by each of the information processing devices A(i), interrelationships between each of the information processing devices A(i) and another information processing device A(k), and the like may change over time in some cases. In other words, it is unclear whether a route that was favorable in the past will also be favorable in the present, and in some situations, a route that was predicted to be unfavorable may turn out to be significant after being tentatively used.

For this reason, in the present example, a route that was favorable in the past (a route having a high expected value as a route candidate) may become degraded in some cases, and conversely, a route that was unfavorable in the past (a route having a low expected value as a route candidates) may become favorable in some cases. Consequently, in the information processing devices A(i), in the case in which a route that was favorable in the past becomes degraded, it may be meaningful to set various routes as route candidates, such as a route that was unfavorable in the past, a route having a moderate expected value in the past, or a random route, for example.

Here, in the present embodiment, one-dimensional values may be used for values such as the correlation values, the expected values, and the threshold values, or values of two or higher dimensions may be used. In other words, the values such as the correlation values, the expected values, and the threshold values may also be treated as two-dimensional or higher-dimensional vectors. The degree of correlation (correlation value) between two vectors may be determined on the basis of the value of the norm (length) of the difference vector between the two vectors. For example, the smaller the norm of the difference vector, the shorter the distance between the two vectors, which is treated as a high degree of correlation.

### Evaluation of content of answer

The answer content determination unit 175 is capable of using a numerical value similar to the expected value computed by the expected value computation unit 194 to evaluate the content of an actually obtained answer, for example.

In other words, by determining a numerical value on the basis of the actually obtained answer, and comparing the numerical value to a predetermined threshold value, the answer content determination unit 175 may make a determination such as whether or not the content of the answer is adequate.

In this case, the expected value computed by the route (in the present embodiment, the route candidate) when a route is decided by the route decision unit 173 and the expected value computed for the answer obtained from the route after actually transmitting a question along the route (here also referred to using the same term "expected value" for convenience) are ideally the same, but in actuality, the values may diverge in some cases due to factors such as error or change over time. For this reason, in the case in which the actually obtained answer is inadequate, the answer content determination unit 175 changes how the question is asked. Consequently, a more favorable route may be found.

Note that the threshold value used when selecting a favorable route from among route candidates (the threshold value related to the expected value of each route candidate) may be different from the threshold value for determining whether or not the content of an actually obtained answer is adequate (the threshold value related to the expected value of the actually obtained answer).

Additionally, various statements may also be considered in the evaluation. For example, one or more of an aspect that raises the evaluation value for a greater amount of information collected as the answer, an aspect that raises the evaluation value for a faster collection of information as the answer, and an aspect that raises the evaluation value for a higher likelihood of the information collected as the answer may be used.

Note that any method may be used as the method of determining the likelihood of information. For example, a method that raises the likelihood as more information processing devices A(i) provide answers containing the information may be used.

### Rules and logic

In the present embodiment, rules may also be set regarding a question or an answer.

A rule may be set for each question, or set in common for two or more questions, for example.

A rule may include a condition related to the information processing devices A(i) to treat as the peers to be asked a question (questioned peer).

A rule may also include a condition related to the method of returning an answer to the question.

A rule may also include a threshold value condition. Note that the threshold value does not have to be a one-dimensional value, and may also be a two-dimensional or higher-dimensional value, for example.

Also, a rule may include a condition related to payment, such as "the product can be purchased by paying a fee" or "the production can be obtained without paying a fee", for example.

Here, in the present embodiment, a rule may be managed by being incorporated into the route decision condition 134, but may also be managed separately, for example.

Also, rules may be different for each of the information processing devices A(i) or for each user, for example. As another example, rules may be shared in common for entities belonging to a predetermined organization, such as traffic rules being shared in common within the same geographical area (for example, a country).

In the present embodiment, logic may also be set regarding a question.

Logic may be set for each question, or set in common for two or more questions, for example.

Logic may include a condition on determining that a predetermined process related to a question or an answer has been completed.

Logic may include a condition for generating a route along which to transmit a question.

Logic may also include a condition on ending a series of processes for sending a question and receiving an answer along a route. As such a condition, a condition such as a condition on ending such a process in response to obtaining all answers expected to be received, a condition on ending such a process in response to obtaining answers from information processing devices in a predetermined number of layers, a condition on setting a time limit expressing a maximum length of time to continue such a process and ending the process in response to the time limit elapsing, or a condition on ending such a process in response to collecting a predetermined number of a predetermined piece of information. Here, in the present embodiment, with regard to a portion in which other information processing devices A(k) are arranged in series from the information processing device A(i) from which a question originates, the number of layers refers to the number of other information processing devices A(k) arranged in series excluding the originating information processing device A(i). Note that various values such as the time limit may be set in any way by a user of the originating information processing device A(i), for example.

Here, in the present embodiment, logic may be managed by being incorporated into the route decision condition 134, but may also be managed separately, for example.

Note that although the present embodiment distinguishes between rules and logic, rules and logic do not necessarily have to be distinguished, and furthermore may be distinguished in a way other than the distinction indicated in the present embodiment.

### Example of processes performed in information processing devices

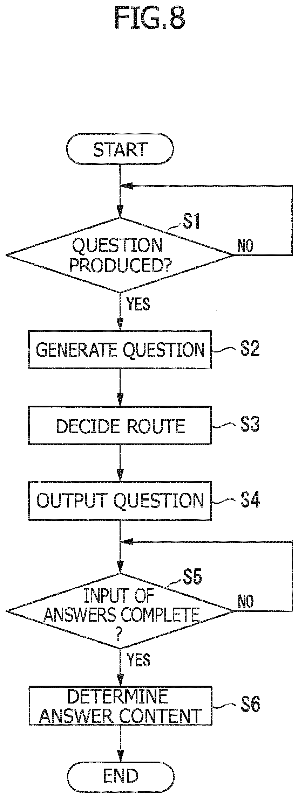

FIG. 8 is a diagram illustrating an example of a processing sequence performed in the information processing devices A(i) according to an embodiment of the present invention.

The example of FIG. 8 illustrates an example of a processing sequence performed by the first information processing device A(1).

### (Step S1)

In the first information processing device A(1), the question output processing unit 171 determines through continuous monitoring whether or not a question has been produced. The determination is made on a predetermined time interval, for example.

Here, a question is produced because a user operates the information processing device A(1) to input the question, for example. As another example, the content of a question may be preset in the first information processing device A(1), and the question may be produced at periodic timings or the like.

If the result of the determination is that the question output processing unit 171 determines that a question has been produced in the first information processing device A(1) (step S1: YES), the flow proceeds to the process of step S2.

On the other hand, if the result of the determination is that the question output processing unit 171 determines that a question has not been produced in the first information processing device A(1) (step S1: NO), the process of step S1 is repeated.

### (Step S2)

In the case of determining that a question has been produced in the first information processing device A(1), the question output processing unit 171 generates question data a(1) expressing the content of the question. Thereafter, the flow proceeds to the process of step S3.

### (Step S3)

In the first information processing device A(1), the route decision unit 173 decides a route for the question data a(1) generated by the question output processing unit 171. Thereafter, the flow proceeds to the process of step S4.

### (Step S4)

In the first information processing device A(1), the question output processing unit 171 outputs the generated question data a(1) on the route decided by the route decision unit 173. Thereafter, the flow proceeds to the process of step S5.

### (Step S5)

In the first information processing device A(1), the answer content determination unit 175 determines whether or not all answers on the route along which the question data a(1) was transmitted have been input into the device itself (the first information processing device A(1)).

If the result of the determination is that the answer content determination unit 175 determines that all answers on the route along which the question data a(1) was transmitted have been input into the first information processing device A(1) (step S5: YES), the flow proceeds to the process of step S6.

On the other hand, if the result of the determination is that the answer content determination unit 175 determines that not all answers on the route along which the question data a(1) was transmitted have been input into the first information processing device A(1) (step S5: NO), the process of step S5 is repeated.

Here, in the present embodiment, all answers on a single route may be collectively sent as a single answer, like in the example of FIG. 1, the answers from each of the information processing devices A(i) on a single route may be sent as separate answers, like the example of FIG. 2, or a mixture of both cases is possible.

### (Step S6)

In the first information processing device A(1), the answer content determination unit 175 determines the content of the input answer(s). The current flow of processes then ends.

Here, the process of step S2 and the process of step S3 may be reversed in order. In this case, in the first information processing device A(1), a route is decided for a produced question, and after that, question data expressing the content of the question is generated.

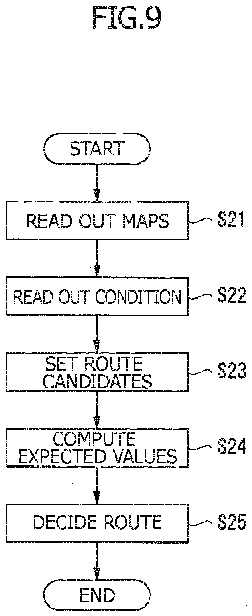

FIG. 9 is a diagram illustrating an example of a processing sequence performed in the information processing devices A(i) according to an embodiment of the present invention.

The example of FIG. 9 illustrates the details of the process of step S3 (the process of deciding a route) illustrated in FIG. 8.

### (Step S21)

In the route decision unit 173 of the first information processing device A(1), maps to be used by the process, such as the relationship map 131, the language map 132, and the file map 133, for example, are read out from the storage unit 113 by the map readout unit 191. Thereafter, the flow proceeds to the process of step S22.

### (Step S22)

In the route decision unit 173 of the first information processing device A(1), the route decision condition 134 is read out from the storage unit 113 by the condition readout unit 192 as the condition to be used by the process. Thereafter, the flow proceeds to the process of step S23.

Note that the process of step S21 and the process of step S22 may be reversed in order.

### (Step S23)

In the route decision unit 173 of the first information processing device A(1), a plurality of route candidates for example are set on the basis of the route decision condition 134 by the route candidate setting unit 193. In this case, the route candidate setting unit 193 may reference the relationship map 131, and may also reference one or more of the language map 132 and the file map 133. Thereafter, the flow proceeds to the process of step S24.

### (Step S24)

In the route decision unit 173 of the first information processing device A(1), the expected value of each route candidate is computed by the expected value computation unit 194. Thereafter, the flow proceeds to the process of step S25. In this case, the expected value computation unit 194 may reference one or more of the relationship map 131, the language map 132, the file map 133, and the route decision condition 134.

### (Step S25)

In the route decision unit 173 of the first information processing device A(1), the route to adopt is decided on the basis of the expected value of the route computed for each route candidate. In this case, the route decision unit 173 may reference the route decision condition 134. The current flow of processes then ends.

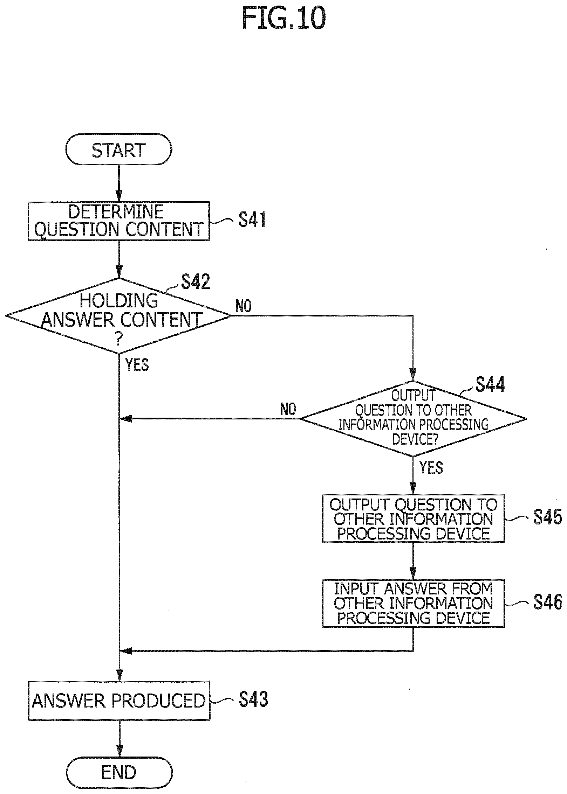

FIG. 10 is a diagram illustrating an example of a processing sequence performed in the information processing devices A(i) according to an embodiment of the present invention.

The example of FIG. 10 is a diagram illustrating an example of a processing sequence performed in an information processing device A(i) where there is a possibility of forming a secondary route section as illustrated in FIG. 3.

### (Step S41)

In the ith information processing device A(i), the question content determination unit 172 determines the content of the question in the question data sent from the (i-1)th information processing device A(i-1). Thereafter, the flow proceeds to the process of step S42.

### (Step S42)

In the ith information processing device A(i), the question content determination unit 172 determines, on the basis of the determined content of the question, whether or not the device itself (the information processing device A(i)) is holding information that would serve as the content of an answer to the question.

If the result of the determination is that the question content determination unit 172 determines, on the basis of the determined content of the question, that the ith information processing device A(i) itself is holding information that would serve as the content of an answer to the question (step S42: YES), the flow proceeds to the process of step S43.

On the other hand, if the result of the determination is that the question content determination unit 172 determines, on the basis of the determined content of the question, that the ith information processing device A(i) itself is not holding information that would serve as the content of an answer to the question (step S42: NO), the flow proceeds to the process of step S44.

Here, in the present embodiment, a certain device holding certain information means that the information is stored in a storage unit or the like of the device, for example.

Note that if the question content determination unit 172 determines, on the basis of the determined content of the question, that the ith information processing device A(i) itself is holding information that would serve as a part of the content of an answer to the question, but is not holding the remaining part, the flow proceeds to the process of step S44, for example. In this case, in the processes from step S44 to step S46, processes may be performed for the information of the remaining part, or processes for the entire information of the content of the answer may be performed.

### (Step S43)

In the ith information processing device A(i), an answer is produced. The current flow of processes then ends.

### (Step S44)

Because the ith information processing device A(i) itself is not holding information that would serve as the content of an answer to the question, the question content determination unit 172 determines whether or not to output a question to another information processing device B(n). Here, n represents an integer equal to or greater than 1, and the other information processing device B(n) represents an information processing device which may be included on a secondary route as illustrated in FIG. 3.

If the result of the determination is that the question content determination unit 172 of the ith information processing device A(i) determines to output a question to the other information processing device B(n) (step S44: YES), the flow proceeds to the process of step S45.

On the other hand, if the result of the determination is that the question content determination unit 172 of the ith information processing device A(i) determines not to output a question to the other information processing device B(n) (step S44: NO), the flow proceeds to the process of step S43. Note that in the present example, even in the case in which the ith information processing device A(i) itself is not holding information that would serve as the content of an answer to a question, an answer that has no content is produced, but as another example, it may be configured such that an answer is not produced in such a case.

### (Step S45)

If the question content determination unit 172 of the ith information processing device A(i) determines to output a question to the other information processing device B(n), the question output processing unit 171 outputs question data to the other information processing device B(n). In this case, the question output processing unit 171 may output question data having the same question content as the question data a(i-1) sent from the (i-1)th information processing device A(i-1) to the other information processing device B(n), or generate question data having different question content related to the question data a(i-1) sent from the (i-1)th information processing device A(i-1), and output the generated question data to the other information processing device B(n), for example. Thereafter, the flow proceeds to the process of step S46.

### (Step S46)

The ith information processing device A(i) receives answer data sent from the other information processing device B(n), and acquires the content of the answer included in the answer data. Thereafter, the flow proceeds to the process of step S43.

In the present example, in the ith information processing device A(i), some or all of the content of the answer obtained from a secondary route in this way is used as the content of the answer in the ith information processing device A(i) itself.

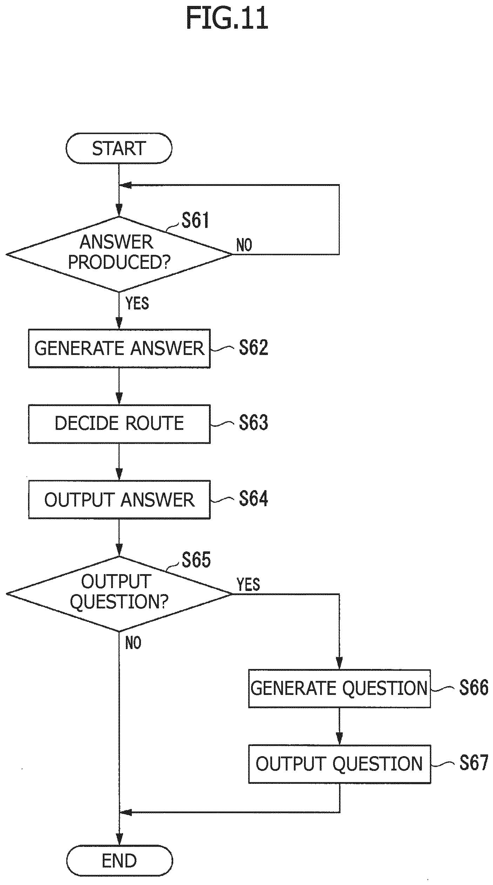

FIG. 11 is a diagram illustrating an example of a processing sequence performed in the information processing devices A(i) according to an embodiment of the present invention.

The example of FIG. 11 illustrates an example of a processing sequence performed by the information processing device A(i), where i = 2 to N.

### (Step S61)

In the ith information processing device A(i), it is determined whether or not an answer has been produced. The answer may be produced because the device itself (the information processing device A(i)) is holding the content of the answer, because the content of the answer has been sent from a secondary route section, or because of both.

If the result of the determination is that an answer is determined to have been produced in the ith information processing device A(i) (step S61: YES), the flow proceeds to the process of step S62.

On the other hand, if the result of the determination is that an answer is determined not to have been produced in the ith information processing device A(i) (step S61: NO), the process of step S61 is repeated.

### (Step S62)

In the ith information processing device A(i), the answer output processing unit 174 generates answer data b(i) expressing the content of the produced answer (step S62). Thereafter, the flow proceeds to the process of step S63.

### (Step S63)

In the ith information processing device A(i), the route decision unit 173 decides a route along which to transmit the generated answer data b(i). Thereafter, the flow proceeds to the process of step S64.

Here, the route decision unit 173 decides along which to return the answer data b(i) on the basis of the method of returning an answer specified in the question data a(i-1) input from the (i-1)th information processing device A(i-1), for example.

### (Step S64)

In the ith information processing device A(i), the answer output processing unit 174 outputs the generated answer data b(i) to the route decided by the route decision unit 173 (here, the route along which to return an answer). Thereafter, the flow proceeds to the process of step S65.

### (Step S65)

In the ith information processing device A(i), the question output processing unit 171 determines whether or not to output question data to the (i+1)th information processing device A(i+1).

If the result of the determination is that the question output processing unit 171 of the ith information processing device A(i) determines to output question data to the (i+1)th information processing device A(i+1) (step S65: YES), the flow proceeds to the process of step S66.

On the other hand, if the result of the determination is that the question output processing unit 171 of the ith information processing device A(i) determines not to output question data to the (i+1)th information processing device A(i+1) (step S65: NO), the current flow of processes ends.

### (Step S66)

In the ith information processing device A(i), the question output processing unit 171 generates question data a(i) to output to the (i+1)th information processing device A(i+1). Thereafter, the flow proceeds to the process of step S67.

### (Step S67)

In the ith information processing device A(i), the question output processing unit 171 outputs the generated question data a(i) to the (i+1)th information processing device A(i+1).

Here, the process of step S62 and the process of step S63 may be reversed in order. In this case, in the information processing device A(i), a route is decided for the produced answer, and after that, the answer data b(i) expressing the content of the answer is generated.

### Specific example applying information processing system

A specific example applying the information processing system 1 according to the present embodiment will be illustrated.

Note that the following illustrates a conceptual representation of processes performed by the information processing device A(i) using a format such as a question string and an answer string understood by humans for the sake of easy explanation, but the information processing device A(i) may handle and recognize information in a format such as text in the same way as humans, or handle and recognize information as information bits without recognizing the information as text or the like, for example.

Also, the following mainly illustrates an example in which the information processing device A(i) automatically proceeds with the processes, but the information processing device A(i) may also request a user to input information at any timing, and perform subsequent processes on the basis of information input by the user, for example.

For example, the process of providing an answer to a question may be performed automatically by the information processing device A(i), or the content of the question may be displayed or otherwise presented to the user, and the information processing device A(i) may acquire the content of an answer and perform the processing of answering on the basis of information input by the user.

### Applied example: confirmation of lecture cancellation

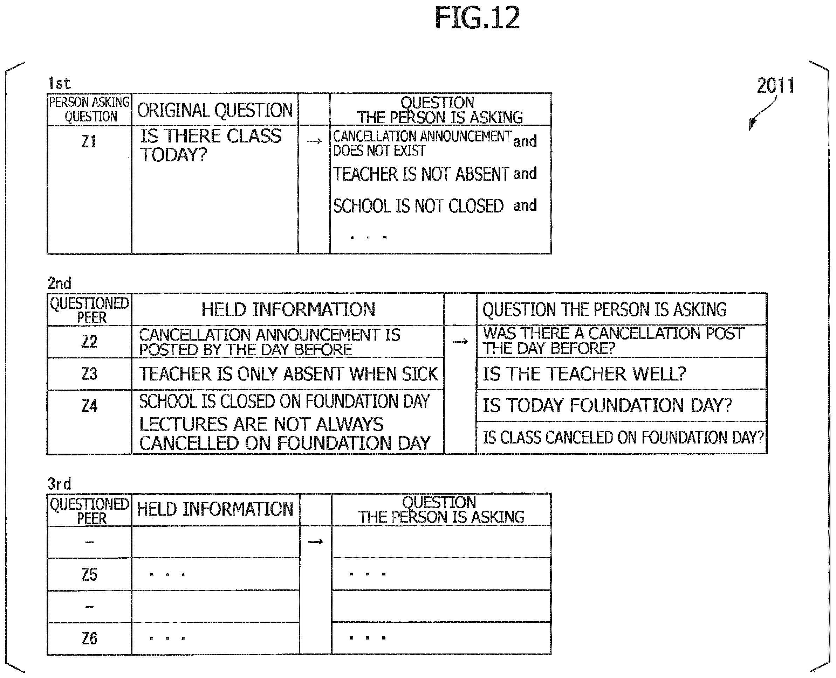

FIG. 12 is a diagram illustrating a conceptual representation 2011 of a process in an applied example (confirmation of lecture cancellation) of the information processing system 1 according to an embodiment of the present invention.

In the example of FIG. 12, respectively separate information processing devices Z1 to Z6 are assumed to be the information processing devices A(i) included in the information processing system 1.

Also, the present example illustrates a case in which the information used by each of the information processing devices Z1 to Z6 is stored in each of the information processing devices Z1 to Z6, but some or all of the information may also be stored in a server device (in the examples of FIGS. 1 and 2, the server device 11).

The process of a first stage (1st) will be described.

Assume that a user of the information processing device Z1 is the person asking a question.

Assume that in the information processing device Z1, the question "Is there class today?" is produced as the original question. The question may be input into the information processing device Z1 by the user, for example.

The information processing device Z1 converts the question "Is there class today?" into AND questions that confirm statements such as "Cancellation announcement does not exist", "Teacher is not absent", and "School is not closed" as the question that the person is asking.

Thereafter, the information processing device Z1 decides a route along which to transmit the AND questions, and sends question data for asking the AND questions to the other information processing devices Z2, Z3, and Z4 according to the route.

At this point, any method may be used as the method of converting a single question into a plurality of questions. For example, a method of logically converting questions into each other (for example, a single higher-level question and a plurality of lower-level questions) may be set in the information processing device Z1. In other words, in the case of dividing an original single question into a plurality of questions, if answers to the plurality of questions are obtained, obtaining an answer to the original single question from the plurality of answers is set to be logically valid. As another example, an association table between a single question and a plurality of questions for converting a single question into a plurality of questions may also be preset in the information processing device Z1.

Also, in the present example, AND questions mean that it is necessary for all of the answers to the plurality of questions to be satisfied. Note that as another example, questions other than AND questions may also be used.

The process of a second stage (2nd) will be described.

The information processing devices Z2, Z3, and Z4 acting as the questioned peers each receive the AND questions sent from the information processing device Z1.

In response to the questions, the information processing device Z2 is holding the information "Cancellation announcement is posted by the day before", and converts the question to the question "Was there a cancellation post the day before?" as the "question that the person is asking". However, in the information processing device Z2, a different information processing device to act as the peer to which to send the question is not prescribed in the relationship map 131, and therefore the information processing device Z2 does not ask any further questions.

The information processing device Z3 is holding the information "Teacher is only absent when sick", and converts the question to the question "Is the teacher well?" as the "question that the person is asking". Thereafter, the information processing device Z3 sends question data expressing the content of the question to the information processing device Z5.

The information processing device Z4 is holding the information "School is closed on Foundation Day", and converts the question into the question "Is today Foundation Day?" as the "question that the person is asking". However, in the information processing device Z4, a different information processing device to act as the peer to which to send the question is not prescribed in the relationship map 131, and therefore the information processing device Z4 does not ask any further questions.

Furthermore, the information processing device Z4 is holding the information "Lectures are not always canceled on Foundation Day", and converts the question to the question "Is class canceled on Foundation Day?" as the "question that the person is asking". Thereafter, the information processing device Z3 sends question data expressing the content of the question to the information processing device Z6.

Note that the process of the third stage (3rd) is assumed to continue similarly to the process of the second stage (2nd).

Also, processes of a fourth stage (4th) and thereafter may also be performed similarly.

In the present example, the information processing device Z1 can obtain an answer based on the information held by the other information processing devices Z2 to Z6 to which the questions are transmitted.

Here, in the example of FIG. 12, in the process of the first stage (1st), when the question output processing unit 171 converts the "original question" into the "question that the person is asking", at least one of the language map 132 and the file map 133 may be used. For example, in the example of FIG. 12, an association between "lecture cancellation" and "no class" in the language map 132 and an association between "lecture cancellation" and "bulletin board" in the file map 133 are used.

Also, in the example of FIG. 12, in the process of the first stage (1st), the relationship map 131 is used when the information processing device Z1 sets a route candidate including the other information processing devices Z2 to Z4 as the targets to which to send the questions. In the example of FIG. 12, an association between "lecture cancellation" and "information processing device W2" (in this example, assumed to refer to the information processing device Z2) in the relationship map 131 is used, for example.

Also, in the example of FIG. 12, in the process of the second stage (2nd), the question output processing unit 171 may use at least one of the language map 132 and the file map 133 in the case of generating the "question that the person is asking" on the basis of the input question and the "held information".

Similarly, the relationship map 131, the language map 132, and the file map 133 may also be used in subsequent processes as necessary.

In the present example, a person A (information processing device Z1) is able to obtain an answer based on information held by the other information processing devices Z2 to Z6 that transmit questions (persons B, C, D, E, and F). With this arrangement, the person A is able to obtain information related to whether or not class is canceled, and is assisted in determining whether or not to go to the classroom at the scheduled time for class.

Note that the person A is unaware of the existence of the information processing devices Z5 and Z6 (persons E and F).

### Applied example: confirmation of intersection

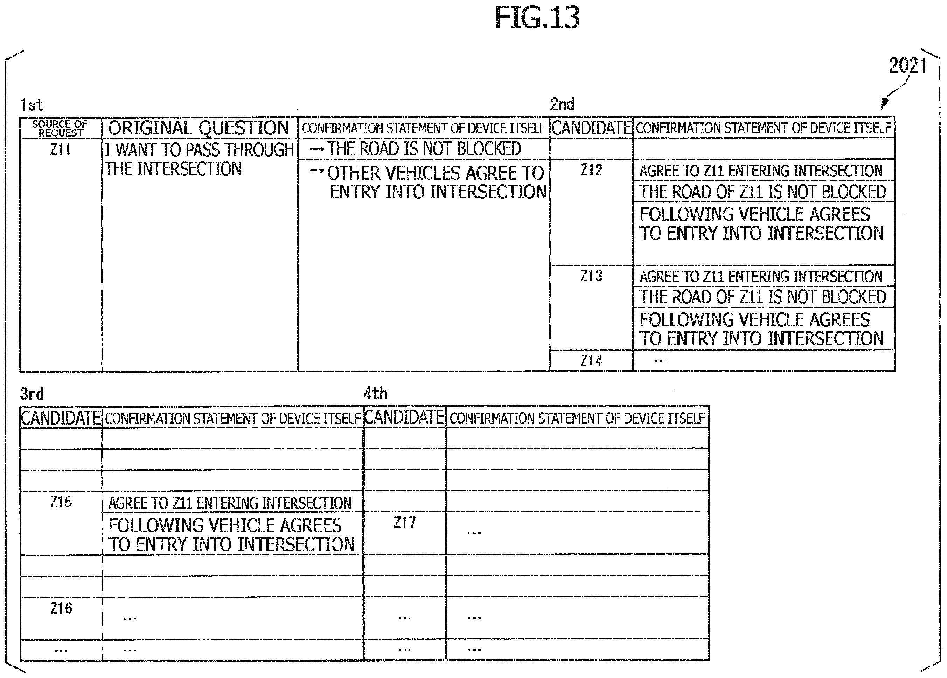

FIG. 13 is a diagram illustrating a conceptual representation 2021 of a process in an applied example (confirmation of intersection) of the information processing system 1 according to an embodiment of the present invention.

In the example of FIG. 13, respectively separate information processing devices Z11 to Z17 are assumed to be the information processing devices A(i) included in the information processing system 1.

In the present example, the information processing devices Z11 to Z17 are assumed to be onboard respectively separate automobiles. Each of the information processing devices Z11 to Z17 may be integrated into an automobile, for example. Note that as another example, any other vehicle may be used instead of an automobile. Also, as another example, the information processing devices Z11 to Z17 may be mobile devices carried by users who ride in the respectively separate automobiles.

Also, the present example illustrates a case in which the information used by each of the information processing devices Z11 to Z17 is stored in each of the information processing devices Z11 to Z17, but some or all of the information may also be stored in a server device (in the examples of FIGS. 1 and 2, the server device 11).

The process of a first stage (1st) will be described.

Assume that the information processing device Z11 is the source of a request (the device from which a question originates).

Assume that in the information processing device Z11, the question "I want to pass through the intersection" is produced as the original question. The automobile equipped with the information processing device Z11 may produce the question automatically on the basis of information from a car navigation system or the like when the automobile approaches the intersection, for example.

The information processing device Z11 converts the question "I want to pass through the intersection" into the AND questions "The road is not blocked" and "Other vehicles agree to entry into intersection" as the confirmation statements of the information processing device Z11 itself (the question that the person is asking).

Thereafter, the information processing device Z11 decides a route along which to transmit the AND questions, and sends question data for asking the AND questions to the other information processing devices Z12, Z13, and Z14 according to the route.

At this point, any method may be used as the method of converting a single question into a plurality of questions. For example, a method of logically converting questions into each other (for example, a single higher-level question and a plurality of lower-level questions) may be set in the information processing device Z11. In other words, in the case of dividing an original single question into a plurality of questions, if answers to the plurality of questions are obtained, obtaining an answer to the original single question from the plurality of answers is set to be logically valid. As another example, an association table between a single question and a plurality of questions for converting a single question into a plurality of questions may also be preset in the information processing device Z11.

Also, in the present example, AND questions mean that it is necessary for all of the answers to the plurality of questions to be satisfied. Note that as another example, questions other than AND questions may also be used.

In the present example, for each information processing device A(i), one or more pieces of information such as information about a real-time position detected using the Global Positioning System (GPS) or the like, information about an address corresponding to the current position, information about the name of a feature such as a road or intersection at the current position, information about the owner of the automobile, and information about the family structure of the owner of the automobile may be associated in the relationship map 131, for example.

The process of a second stage (2nd) will be described.

The information processing devices Z12, Z13, and Z14 acting as the questioned peers each receive the AND questions sent from the information processing device Z11.

In response to the questions, the information processing device Z12 produces questions for confirming the statements "Agree to the information processing device Z11 entering the intersection", "The road of the information processing device Z11 is not blocked", and "Following vehicle agrees to entry into intersection" as the confirmation statements of the information processing device Z12 itself.

Additionally, the information processing device Z13 and the information processing device Z14 also produce questions similar to those of the information processing device Z12.

Thereafter, the information processing devices Z12, Z13, and Z14 send question data expressing the content of the questions for confirming the statement "In agreement with following vehicle regarding intersection entry" to devices such as the information processing devices Z15 and Z16.

In response to the questions, the devices such as the information processing devices Z15 and Z16 produce questions for confirming the statements "Agree to the information processing device Z11 entering the intersection" and "Following vehicle agrees to entry into intersection" as the confirmation statements of each device itself.

Note that the process of the third stage (3rd) is assumed to continue similarly to the process of the second stage (2nd).

Also, processes of a fourth stage (4th) and thereafter may also be performed similarly.

In the present example, the information processing device Z11 can obtain an answer based on the information held by the other information processing devices Z12 to Z17 to which the questions are transmitted. With this arrangement, the information processing device Z11 is capable of obtaining information related to the automobile equipped with the information processing device Z11 entering the intersection, and is assisted in determining whether or not to allow the automobile to enter the intersection.

Note that in the series of processes, each of the information processing devices Z11 to Z17 may use any of the relationship map 131, the language map 132, and the file map 133 for reasons similar to the case of the example in FIG. 12.

At this point, an example of a situation at an intersection will be illustrated.

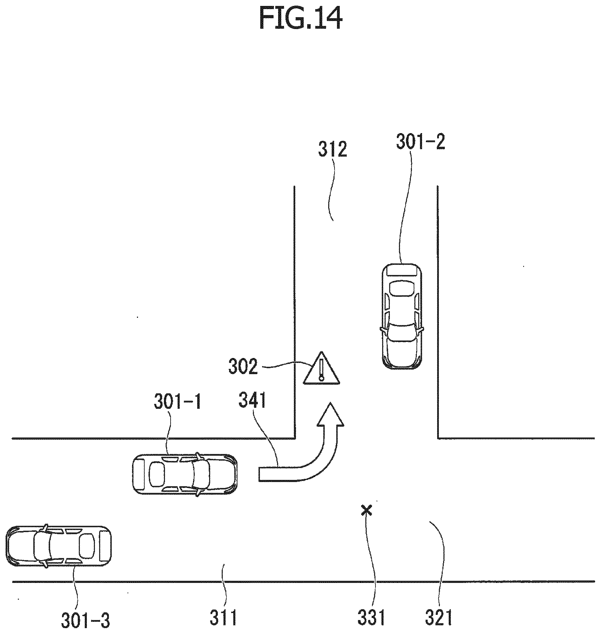

FIG. 14 is a diagram illustrating an example of a situation at an intersection 321 according to an embodiment of the present invention.

FIG. 14 illustrates an intersection 321 containing two intersecting roads 311 and 312, an automobile 301-1 about to enter the intersection 321 and attempting to turn left from one road 311 to the other road 312, an automobile 301-2 traveling on the other road 312 toward the intersection 321, an automobile 301-3 traveling on the road 311 away from the intersection 321, and an obstacle 302 existing at the spot onto which the automobile 301-1 is attempting to turn left. Assume that the obstacle 302 exists in the blind spot of the automobile 301-1.

Also, FIG. 14 illustrates the left turn direction 341 of the automobile 301-1 and a reference position 331 of the intersection 321.

Here, the reference position 331 of the intersection 321 indicates a position used as a reference position of the intersection 321 in the case in which position information related to the intersection 321 is used, for example. The reference position 331 may be set in any way.

The automobiles 301-1 to 301-3 are respectively equipped with separate information processing devices A(i).

The information processing device A(i) onboard the automobile 301-1 transmits question data for querying the information processing device A(i) onboard the other automobile 301-2 present near the intersection 321 about whether or not the automobile 301-1 can enter the intersection 321. Note that in the present example, the information processing device A(i) onboard another automobile is illustrated as the query recipient, but as another example, an information processing device A(i) installed in equipment such as a traffic light existing near the intersection 321 may also be included as a query recipient.

Here, when the information processing device A(i) onboard the automobile 301-1 sets the peer(s) to be questioned, one or more conditions may be used, such as a condition on the distance between the position of the other automobile (or the position of the information processing device A(i) onboard the other automobile) and the reference position 331 of the intersection 321 being within a predetermined threshold, a condition on the distance between the position of the other automobile (or the position of the information processing device A(i) onboard the other automobile) and the position of the automobile 301-1 (or the position of the information processing device A(i) onboard the automobile 301-1) being within a predetermined threshold, or a condition on the other automobile being capable of detecting the situation in the blind spot of the automobile 301-1, for example.

As the position of an automobile, a position detected by a GPS function provided in the automobile may be used, for example.

As the information about the reference position 331 of the intersection 321, position information detected by the GPS function in real time may be used, or information about the position preset in a fixed manner may be used, for example.

Also, whether or not the other automobile is capable of detecting the situation in the blind spot of the automobile 301-1 may be determined on the basis of the position of the other automobile and the forward direction of the other automobile, for example. It is possible to specify the forward direction of the other automobile on the basis of change over time in the position of the other automobile, for example. For example, in the case in which the other automobile is moving toward the blind spot on the road where the blind spot exists, it may be determined that the other automobile is capable of detecting the situation in the blind spot.

In the example of FIG. 14, the information processing device A(i) onboard the automobile 301-1 sets the information processing device A(i) onboard the automobile 301-2 as the peer to be asked a question. In other words, the information processing device A(i) onboard the automobile 301-1 selects the automobile 301-2 as the peer to which to send a question because the automobile 301-2 exists at a position near the intersection 321 and is capable of detecting the situation in the blind spot of the automobile 301-1.

Also, in the example of FIG. 14, the automobile 301-3 exists at a position distant from the intersection 321, and the information processing device A(i) onboard the automobile 301-1 does not select the information processing device A(i) onboard the automobile 301-3 as a peer to which to send a question.

In the example of FIG. 14, the existence of the obstacle 302 is detected by a device such as a camera onboard the automobile 301-2, and information about the detection result is transmitted in a notification to the information processing device A(i) onboard the automobile 301-2. With this arrangement, in response to a question such as "Is it possible to pass through the intersection?" from the information processing device A(i) onboard the automobile 301-1 from which the question originates, the information processing device A(i) onboard the automobile 301-2 returns an answer such as "It is not possible to pass through". In accordance with the answer, the information processing device A(i) onboard the automobile 301-1 selects not to enter the intersection 321.

At this point, at a traffic scene such as the intersection 321, information such as time similarity and position similarity for example is normally important as a condition with regard to the relationship between the information processing device Z11 that asks a question and the information processing devices Z12 to Z17 that provide answers. Also, as another example, information such as matching or similarity of family structures may be included in the condition.

For example, with regard to time, a condition on preferentially selecting the peer who last entered the relevant traffic scene as the peer to be asked a question may be used.

Also, for example, with regard to distance, a condition on preferentially selecting the peer with the shortest distance between the question origin and the peer as the peer to be asked a question may be used.

Also, the example of FIG. 14 illustrates a case of confirming the presence or absence of the obstacle 302, but any other statement may also be confirmed. For example, a statement such as whether or not a pedestrian is present or whether or not a traffic light exists may also be confirmed. Note that in a traffic scene, it is preferable to allow subsequent operations by an automobile in the case in which safety is reliably confirmed from the content of an answer to a question.

In a traffic scene such as the intersection 321, the situation in a predetermined region of the scene may also be managed by a predetermined device, for example. The predetermined region may be a region of the vicinity of the traffic scene in question and a region sufficient for guaranteeing safety, such as the region within a predetermined radius centered on the reference position 331 of the intersection 321, for example. Also, the situation in the predetermined region may be information such as the position or speed of a vehicle such as an automobile, or information such as the position or speed of an obstacle other than a vehicle or of a pedestrian, for example.

Also, the predetermined device may be a single information processing device A(i), a single server device (in the examples of FIGS. 1 and 2, the server device 11), or a device such as a traffic light installed at the traffic scene, for example. Furthermore, two or more devices may share the responsibility of acting as the predetermined device, for example.

For example, as a configuration by which one or a plurality of devices present at a traffic scene ascertain and manage the situation in a predetermined region in real time, a configuration in which another device can reference and utilize the real-time information as necessary may be used.

Also, in a traffic scene, a large number of automobiles are traveling, and it is useful to utilize information obtained from each of the large number of automobiles (also referred to as big data information).

In this way, in the example of passing through an intersection, when the automobile that the person A (information processing device Z11) is riding passes through the intersection, automobiles are capable of sharing respective determination results (content of answers) with each other for safe travel.

For example, a query for a determination result is issued from the automobile that the person A is riding to other automobiles or the like (the information processing devices Z12 to Z17) near the intersection. In the case in which one of the queried automobiles returns a determination result such as "The person A is not allowed to pass through" because the road is blocked for example, the automobile that the person A is riding decelerates or stops for example without entering the intersection.

In this case, at a predetermined time, a query is issued again from the automobile that the person A is riding to the other automobiles or the like near the intersection. Additionally, the automobile that the person A is riding passes through the intersection in the case in which the result "The person A is allowed to pass through" is returned from all of the query destinations.

Note that the person A is aware of the existence of the information processing devices Z12, Z13, and Z14 (persons B, C, and D), but is unaware of the existence of the information processing devices Z15, Z16, and Z17 (persons E, F, and G).

### Applied example: confirmation of payment

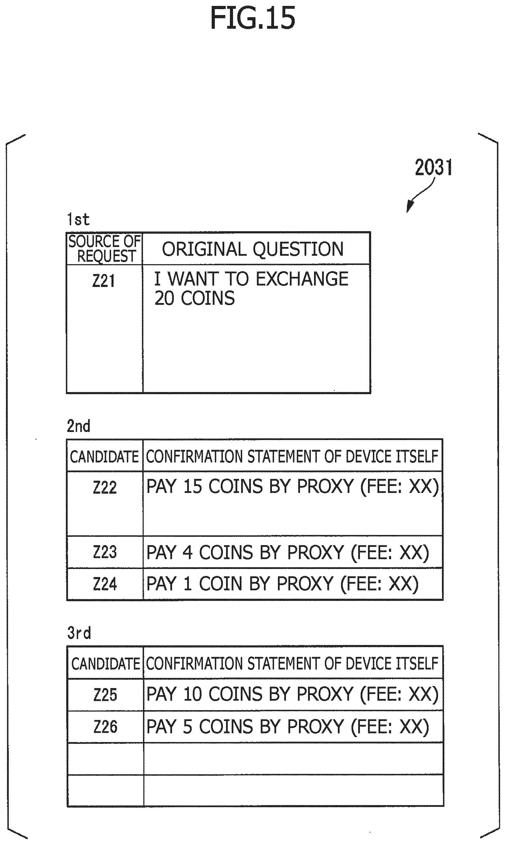

FIG. 15 is a diagram illustrating a conceptual representation 2031 of a process in an applied example (confirmation of payment) of the information processing system 1 according to an embodiment of the present invention.

In the example of FIG. 15, respectively separate information processing devices Z21 to Z26 are assumed to be the information processing devices A(i) included in the information processing system 1.

The present example illustrates a case in which the information used by each of the information processing devices Z21 to Z16 is stored in each of the information processing devices Z21 to Z26, but some or all of the information may also be stored in a server device (in the examples of FIGS. 1 and 2, the server device 11).

The process of a first stage (1st) will be described.

Assume that the information processing device Z21 is the source of a request (question origin).

Assume that in the information processing device Z21, the question "I want to exchange 20 coins" is produced as the original question. The question may be input into the information processing device Z21 by the user, for example.

Note that in the present example, the units of currency are designated "coins".

On the basis of the content of the relationship map 131, the information processing device Z21 transmits question data for requesting the exchange of 15 coins to the information processing device Z22, transmits question data for requesting the exchange of 4 coins to the information processing device Z23, and transmits question data for requesting the exchange of 1 coin to the information processing device Z24. In the present example, these are AND questions.

At this point, any method may be used as the method of converting a single question into a plurality of questions. For example, a method of logically converting questions into each other (for example, a single higher-level question and a plurality of lower-level questions) may be set in the information processing device Z21. In other words, in the case of dividing an original single question into a plurality of questions, if answers to the plurality of questions are obtained, obtaining an answer to the original single question from the plurality of answers is set to be logically valid. As another example, an association table between a single question and a plurality of questions for converting a single question into a plurality of questions may also be preset in the information processing device Z21.

Also, in the present example, AND questions mean that it is necessary for all of the answers to the plurality of questions to be satisfied. Note that as another example, questions other than AND questions may also be used.

In the present example, information about each information processing device A(i), such as the number of owned coins and whether or not exchange by proxy is possible may be associated in the relationship map 131, for example.

The process of a second stage (2nd) will be described.

The information processing devices Z22, Z23, and Z24 acting as the questioned peers each receive the questions sent from the information processing device Z21.

In response to the questions, the information processing device Z22 produces a question for confirming the statement "Pay 15 coins by proxy (fee: xx)" as the confirmation statement of the information processing device Z22 itself.

Also, in the information processing device Z23, "Pay 4 coins by proxy (fee: xx)" is set as the confirmation statement of the information processing device Z23 itself.

Similarly, in the information processing device Z24, "Pay 1 coin by proxy (fee: xx)" is set as the confirmation statement of the information processing device Z24 itself.

Additionally, on the basis of the content of the relationship map 131, the information processing device Z22 transmits question data for requesting the exchange of 10 coins to the information processing device Z25, and transmits question data for requesting the exchange of 5 coins to the information processing device Z26.

Note that the process of the third stage (3rd) is assumed to continue similarly to the process of the second stage (2nd).

Also, processes of a fourth stage (4th) and thereafter may also be performed similarly.

In the present example, the information processing device Z21 can obtain an answer based on the information held by the other information processing devices Z22 to Z26 to which the questions are transmitted. With this arrangement, the information processing device Z21 can obtain information related to the proxy execution of the exchange by the information processing device Z21, cause the other information processing devices Z22 to Z26 to execute the exchange by proxy, and carry out payment (file exchange).

Note that in the series of processes, each of the information processing devices Z21 to Z26 may use any of the relationship map 131, the language map 132, and the file map 133 for reasons similar to the case of the example in FIG. 12.

In this way, in the example of proxy payment, when a person A (information processing device Z21) pays 20 coins to a person B (in the example of FIG. 15, an information processing device not illustrated), an intermediary (such as the information processing devices Z23 and Z24) can make the payment by proxy on the person A's behalf. In the present example, the intermediary determines whether or not to make the payment by proxy on the person A's behalf. For example, the intermediary may or may not take a fee from the person A.

Here, the intermediary may be a credit card company in the real world, for example. For example, a plurality of intermediaries (such as serial multi-level intermediaries, for example) may exist, and in this case, either or both of the persons A and B may choose which intermediary to adopt.

In the present example, a case in which the person A selects an intermediary is described.

The intermediary decides terms such as an upper limit on proxy payment and a fee, according to a trust level with respect to the person A, for example. The person A is able to select which intermediary to use on the basis of the terms such as the upper limit and fee presented by each intermediary.

In the example of FIG. 15, the five information processing devices Z22 to Z26 (persons C, D, E, F, and G) act as intermediaries, and 20 coins are paid from the person A to the person B.

Note that the person A is unaware of the existence of the information processing devices Z25 and Z26 (persons F and G).

### Example of processes from production of question to collection of answers

An example of processes from the production of a question to the collection of answers will be illustrated.

In the present example, the information distance in P2P communication is determined.

The rough flow of cooperation between terminals when searching for information is like the following from (Flow 1) to (Flow 5). In the present example, a terminal is an example of the information processing device A(i).

(Flow 1) A situation occurs in which some piece of information is needed in a terminal. The goal of information collection is to serially collect information such that a value of likelihood obtained from a calculation result (in the present embodiment, the comprehensive expected value) exceeds a threshold value.

(Flow 2) The terminal queries a target (another terminal) that is predicted to know the needed information. The target to query is selected on the basis of the distance (degree of correlation) between the needed information and information related to the target, for example.

Note that the target predicted to know the needed information may also set a condition on whether or not to accept a request for an answer to a question.

(Flow 3) In the target (other terminal) that has received the query, an answer is returned in the case in which information that would serve as the content of the answer has been sufficiently acquired, for example. As an example of such acquisition, an answer may be found inductively by following a route, or as another example, iterative processing may be used to return an answer to the originator (the terminal from which the question originated) if a predetermined condition is satisfied.

(Supplement 1) A map (relationship map 131, language map 132, file map 133) based on information such as the distance (degree of correlation) between information may also be restructured and changed on the basis of a result such as a successful experience or achievement.

(Supplement 2) It is also possible for a plurality of terminals to share relationships such as the distance (degree of correlation) between information to attain more efficient routes or to construct a network that is resilient to changes in information. With this arrangement, organization is possible.

The evaluation of various language information is possible with the language map 132.

For example, the distance between words is computed and weighted. With this arrangement, the semantic distance between words is evaluated.

For example, the content of information may be expressed by a vector to quantify the content of the information.

The distance (degree of correlation) between links joining any information, including files, may also be evaluated using predetermined information. With this arrangement, the file map 133 is generated.

A plurality of tags may also be assigned to terminals in order to search for a terminal related to predetermined information, such as information including a specific keyword or information related to the keyword. As an example, the plurality of tags may be tags such as (#Baseball, #PlayerAAA, #StyleBBB), and vector information containing the plurality of tags may be managed as tag information.

Similarity may also be evaluated by a vector evaluation of the tag information.

In the terminal that needs information, a candidate node (in the present example, another terminal) that is possibly holding the information is generated (set) on the basis of an evaluation result or the like related to a file that contains the information, for example.

The first candidate of a peer to be queried by the terminal is the target (in the present example, another terminal) likely to know the needed information, and as an example, a query is issued to such a target.

In the terminal, the query target is specified on the basis of the relationship map 131.

In the terminal, any information is queried, and in the process of checking the expected result, the expected value in the case of finding an answer according to a specific keyword or the like is estimated. The estimation may be made on the basis of experience obtained in relation to the language map 132 and the file map 133 of the terminal itself, for example.

As an example, in the case in which there is a target that is possibly holding needed information, the terminal predicts the expected value and determines whether or not to issue a query on the basis of the hit ratio (expected value) in the relationship map 131 of the terminal itself. For example, in the case in which the expected value from the prediction process is equal to or greater than a threshold value (target value), the terminal executes a query (question) according to the prediction result. The question is transmitted along a route containing a plurality of other terminals, for example. Note that the terminal may also update the content of each map.

On the other hand, in the case in which the needed information does not exist, or in the case in which some information exists but the result does not exceed the desired threshold value, the terminal may change the route in some way. Examples of changing the route include increasing the number of peers, changing the target to ask, or changing the candidate, for example. Also, another example of changing is to replace any information with related information on the basis of the language map 132 or the file map 133. As another example of changing, in the case in which the result is close to the threshold value (target value) but insufficient, the terminal may apply a change of increasing the sampling count. Also, in the case in which the terminal is incapable of understanding the result, the terminal may change the file, and in the case in which the result is related to totally different information, the terminal may change the language.

Various methods may be used as the method of setting the target value, the method of evaluating, the algorithm, and the like.

Each terminal may also individually determine whether or not the expected result has been found.

For example, by having a terminal that has received a query (question) return a likely answer, it is possible to improve the relationship with the question origin through a successful experience obtained thereby.

Also, by having a terminal that has received a query return an uncertain answer, it is possible to induce a need for further verification, for example.

Also, by having a terminal that has received a query return an incorrect answer, it is possible to induce a failure, for example.

In this way, by having a terminal that has received a query control the content of the answer, it is possible to control the relationship with the question origin.

A terminal may determine whether an answer to a question is correct or incorrect from a value obtained by a threshold value checked against the maps (such as the relationship map 131, the language map 132, and the file map 133, for example) that the terminal itself is holding, for example.

In the terminal, a simplex method or the like may be used to linearize sampling information and select a solution, for example.

The terminal may also decide whether an answer is correct or incorrect through comparison to nodes that have solved other problems of approximately the same level, and thereby set a degree of trust.

Also, in the case in which numerical data having an absolute evaluation exists as an example, an answer may be evaluated on the basis of whether or not the value in question is a value close to the target value. Examples of numerical data having an absolute evaluation include values such as position and speed.

Each of the maps may also be shared within an organization or the like, and in this case, operation according to the same rules is possible.

Overview of hardware configuration of information processing device

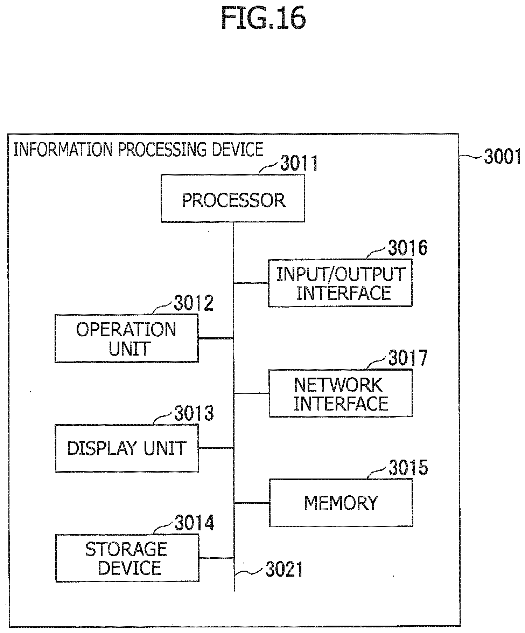

FIG. 16 is a diagram illustrating an example of a hardware configuration of an information processing device 3001 according to an embodiment of the present invention.

The information processing device 3001 having a hardware configuration like the one illustrated in FIG. 16 may be used as the information processing devices A(1) to A(N), B(1), B(2), and B(11) according to the present embodiment.

In the example of FIG. 16, the information processing device 3001 is provided with a processor 3011, an operation unit 3012, a display unit 3013, a storage device 3014, memory 3015, an input/output interface 3016, a network interface 3017, and a bus 3021 connecting these components.

The processor 3011 includes a CPU or the like, and executes a program to thereby execute processing prescribed by the program.

The operation unit 3012 is provided with one or more input devices such as a keyboard and a mouse, and receives operations performed by a user (person).

The display unit 3013 has a screen, and outputs by displaying information on the screen.

The storage device 3014 is a non-volatile storage unit including a hard disk or the like, for example, and stores data or information. The storage device 3014 (or the memory 3015) may also store the information of the program executed by the processor 3011, for example.

The memory 3015 is a volatile storage unit including random access memory (RAM) or the like, and temporarily stores data or information. For example, dynamic random access memory (DRAM) may be used as the RAM

The input/output interface 3016 is an interface that connects to an external recording medium or the like.

The network interface 3017 is an interface that connects to an external network.

Here, the information processing device 3001 may be provided with a single processor or two or more processors as the processor 3011. As an example, the information processing device 3001 may be provided with a plurality of CPUs, and may achieve an overall process by having each of the CPUs respectively execute processes while also causing the plurality of CPUs to cooperate with each other.

### Modifications

The present embodiment illustrates a case in which a single information processing device A(i) performs both the process of transmitting a question and the process of receiving an answer to the question, but as another example, the device that performs the process of transmitting a question and the device that performs the process of receiving an answer to the question may be separate devices. Note that even with such a configuration, the combination of both the device that performs the process of transmitting a question and the device that performs the process of receiving an answer may be considered to form a single information processing device A(i) according to the present embodiment, for example.

### Summary of foregoing embodiment

As above, in the information processing device A(i) of the information processing system 1 according to the present embodiment, an appropriate route can be decided as a route along which to send a question from the information processing device A(i) to obtain an answer to the question.

Also, the information processing device A(i) of the information processing system 1 according to the present embodiment may update one or more of the relationship map 131, the language map 132, the file map 133, and the route decision condition 134 on the basis of one or more of an evaluation result regarding another information processing device A(i) or an evaluation result regarding a route, for example. In the present embodiment, this arrangement makes it possible to improve the content of each map or the content of the route decision condition 134. Also, in the present embodiment, updating the relationship map 131 makes it possible to state relationships between a plurality of information processing devices A(i) more accurately in the relationship map 131. Also, in the present embodiment, even in the case in which properties such as the relationships between a plurality of information processing devices A(i) change over time, the content of each map can be updated in correspondence with the change, for example.

### Configuration examples

One configuration example is an information processing device (in the examples of FIGS. 1 and 2, the information processing device A(i)) provided with a first processing unit (in the example of FIG. 4, the question and answer processing unit 151) that sends first question data (in the examples of FIGS. 1 and 2, the question data a(i)), the first question data being data of a first question, along a first route that includes one or more other information processing devices, in which the first processing unit is provided with a second processing unit (in the example of FIG. 4, the route decision unit 173 that includes the expected value computation unit 194) that computes a first value (in the present embodiment, the expected value) regarding a candidate of the first route on a basis of information expressing the first question and first correspondence information (in the present embodiment, the relationship map 131), and a third processing unit (in the example of FIG. 4, the route decision unit 173) that decides the first route along which to send the first question data on a basis of the first value computed for the candidate of the first route and a first condition (in the present embodiment, the route decision condition 134), the first correspondence information is information associating the first information (in the example of FIG. 5, the information in the "information" field), first specifying information (in the example of FIG. 5, the information in the "information processing device" field) that is information specifying another information processing device, and first degree of correlation information (in the example of FIG. 5, the information in the "correlation value" field) that is information expressing a degree of correlation between the first information and the first specifying information, the first value is a value expressing a degree of expectation regarding a first answer to the first question, and the first condition is a condition on deciding the first route along which to send the first question data from the candidate of the first route on a basis of the first value.

As another configuration example, in the information processing device, the second processing unit computes the first value for a plurality of candidates of the first route, and the third processing unit decides one first route from among the plurality of candidates of the first route.

As another configuration example, in the information processing device, in the case in which a candidate of the first route includes a plurality of other information processing devices, the first value is a value expressing a comprehensive degree of expectation related to the first answer to the first question from the plurality of other information processing devices (in the present embodiment, the value computed by the predetermined formula).

As another configuration example, in the information processing device, the first route includes a route section in which two or more other information processing devices are arranged in series.

As another configuration example, in the information processing device, the first route includes a route section in which two or more other information processing devices are arranged in parallel.

As another configuration example, in the information processing device, the first question data includes information related to the first route.

As another configuration example, in the information processing device, the first processing unit is provided with a fourth processing unit (the map update unit 176) that updates the first correspondence information.

As another configuration example, in the information processing device, the first question data includes information related to a method of returning the first answer.

As another configuration example, in the information processing device, the method of returning the first answer includes a method of directly returning the first answer to the information processing device and a method of indirectly returning the first answer to the information processing device.

As another configuration example, in the information processing device, the first processing unit is provided with a fifth processing unit (in the example of FIG. 4, the question content determination unit 172) that determines content of a second question in second question data sent from a second information processing device, and a sixth processing unit (in the example of FIG. 4, the answer output processing unit 174) that outputs second answer data with respect to the second question data on a basis of a result of determining the content of the second question.

As another configuration example, in the information processing device, the second question data includes information related to a second route, and the first processing unit is provided with a seventh processing unit (in the example of FIG. 4, the question output processing unit 171) that outputs third question data to an output destination based on the second route, the third question data being data of a third question based on the second question.

As another configuration example, in the information processing device, the first processing unit is provided with an eighth processing unit (for example, the route decision unit 173) that converts first language information to second language information on a basis of second correspondence information (in the present embodiment, the language map 132), and the second correspondence information is information associating two pieces of language information (in the example of FIG. 6, the information in the two "language information" fields) and second degree of correlation information (in the example of FIG. 6, the information in the "correlation value" field) that is information expressing a degree of semantic correlation between the two pieces of language information.

As another configuration example, in the information processing device, the first processing unit is provided with a ninth processing unit (for example, the route decision unit 173) that converts first target information to second target information on a basis of third correspondence information (in the present embodiment, the file map 133), and the third correspondence information is information associating two pieces of target information (in the example of FIG. 7, the information in the two "tag information" fields) and third degree of correlation information (in the example of FIG. 7, the information in the "correlation value" field) that is information expressing a degree of correlation between the two pieces of target information.

One configuration example is an information processing method performed in an information processing device (in the present embodiment, the method of information processing performed in the information processing device A(i)), the information processing method including sending, by a first processing unit of the information processing device, first question data, the first question data being data of a first question, along a first route that includes one or more other information processing devices, computing, by a second processing unit of the first processing unit, a first value regarding a candidate of the first route on a basis of information expressing the first question and first correspondence information, and deciding, by a third processing unit of the first processing unit, the first route along which to send the first question data on a basis of the first value computed for the candidate of the first route and a first condition, in which the first correspondence information is information associating the first information, first specifying information that is information specifying another information processing device, and first degree of correlation information that is information expressing a degree of correlation between the first information and the first specifying information, the first value is a value expressing a degree of expectation regarding a first answer to the first question, and the first condition is a condition on deciding the first route along which to send the first question data from the candidate of the first route on a basis of the first value.

One configuration example is a program causing a computer that forms an information processing device (in the present embodiment, the computer forming the information processing device A(i)) to achieve a function of sending first question data, the first question data being data of a first question, along a first route that includes one or more other information processing devices, a function of computing a first value regarding a candidate of the first route on a basis of information expressing the first question and first correspondence information, and a function of deciding the first route along which to send the first question data on a basis of the first value computed for the candidate of the first route and a first condition, in which the first correspondence information is information associating the first information, first specifying information that is information specifying another information processing device, and first degree of correlation information that is information expressing a degree of correlation between the first information and the first specifying information, the first value is a value expressing a degree of expectation regarding a first answer to the first question, and the first condition is a condition on deciding the first route along which to send the first question data from the candidate of the first route on a basis of the first value.

As above, a program for achieving the functions of a device according to an embodiment (such as the information processing devices A(1) to A(N), B(1) to B(2), and B(11), for example) may be recorded (stored) in a computer-readable recording medium (storage medium), and processes can be performed by causing a computer system to load and execute the program recorded on the recording medium.

Note that the "computer system" referred to here may be one that includes an operating system or hardware such as peripheral equipment.

Also, the "computer-readable recording medium" refers to a portable medium such as a flexible disk, a magneto-optical disc, read-only memory (ROM), writable non-volatile memory such as flash memory, or a Digital Versatile Disc (DVD), or refers to a storage device such as a hard disk built into the computer system.

Furthermore, the term "computer-readable recording medium" also encompasses a medium that holds the program for a fixed length of time, such as volatile memory (for example, DRAM) internal to a computer system that acts as a server or a client in the case in which the program is transmitted over a network such as the Internet or a communication channel such as a telephone circuit.

In addition, the program may also be transmitted from a computer system storing the program in a storage device or the like to another computer system through a transmission medium or by a wave transmitted through the transmission medium. Here, the "transmission medium" that transmits the program refers to a medium that has a function of transmitting information, like a network (communication network) such as the Internet or a communication channel (communication line) such as a telephone circuit.

The program may also be one for achieving a portion of the functions described above. Furthermore, the program may also be what is called a difference file (difference program) capable of achieving the functions described above in combination with a program already recorded in the computer system.

Note that although the foregoing describes the present invention using embodiments, the technical scope of the present invention is not limited to the embodiments. It will be apparent to those skilled in the art that various changes and alternatives can be adopted without departing from the spirit and scope of the present invention.

**Reference Signs List**

| | |
|---|---|
| 1 | information processing system |
| 11 | server device |
| 111 | input unit |
| 112 | output unit |
| 113 | storage unit |
| 114 | communication unit |
| 115 | control unit |
| 131 | relationship map |
| 132 | language map |
| 133 | file map |
| 134 | route decision condition |
| 151 | question and answer processing unit |
| 171 | question output processing unit |
| 172 | question content determination unit |
| 173 | route decision unit |
| 174 | answer output processing unit |
| 175 | answer content determination unit |
| 176 | map update unit |
| 191 | map readout unit |
| 192 | condition readout unit |
| 193 | route candidate setting unit |
| 194 | expected value computation unit |
| 301-1 to 301-3 | automobile |
| 302 | obstacle |
| 311 to 312 | road |
| 321 | intersection |
| 331 | reference position |
| 341 | left turn direction |
| 2011, 2021, 2031 | conceptual representation of process |
| 3011 | processor |
| 3012 | operation unit |
| 3013 | display unit |
| 3014 | storage device |
| 3015 | memory |
| 3016 | input/output interface |
| 3017 | network interface |
| 3021 | bus |
| A(1) to A(N), A(i), A(j), B(1) to B(2), B(11), 3001 | information processing device |
| a(1) to a(N-1), a(j-1), a(j), c(1), 21-1 to 21-2 | question data |
| b(2) to b(N), b(j), d(1) to d(2), d(11) | answer data |

## Claims

1. An information processing device comprising:
a first processing unit that sends first question data, the first question data being data of a first question, along a first route that includes one or more other information processing devices, wherein
the first processing unit is provided with
a second processing unit that computes a first value regarding a candidate of the first route on a basis of information expressing the first question and first correspondence information, and
a third processing unit that decides the first route along which to send the first question data on a basis of the first value computed for the candidate of the first route and a first condition,
the first correspondence information is information associating first information, first specifying information that is information specifying the other information processing device, and first degree of correlation information that is information expressing a degree of correlation between the first information and the first specifying information,
the first value is a value expressing a degree of expectation regarding a first answer to the first question,
the first condition is a condition on deciding the first route along which to send the first question data from the candidate of the first route on a basis of the first value, and
in a case in which a candidate of the first route includes a plurality of other information processing devices, the first value is a value expressing a comprehensive degree of expectation related to the first answer to the first question from the plurality of other information processing devices.

2. An information processing device comprising:
a first processing unit that sends first question data, the first question data being data of a first question, along a first route that includes one or more other information processing devices, wherein
the first processing unit is provided with
a second processing unit that computes a first value regarding a candidate of the first route on a basis of information expressing the first question and first correspondence information, and
a third processing unit that decides the first route along which to send the first question data on a basis of the first value computed for the candidate of the first route and a first condition,
the first correspondence information is information associating first information, first specifying information that is information specifying the other information processing device, and first degree of correlation information that is information expressing a degree of correlation between the first information and the first specifying information,
the first value is a value expressing a degree of expectation regarding a first answer to the first question,
the first condition is a condition on deciding the first route along which to send the first question data from the candidate of the first route on a basis of the first value, and
the first route includes a route section in which two or more other information processing devices are arranged in series.

3. An information processing device comprising:
a first processing unit that sends first question data, the first question data being data of a first question, along a first route that includes one or more other information processing devices, wherein
the first processing unit is provided with
a second processing unit that computes a first value regarding a candidate of the first route on a basis of information expressing the first question and first correspondence information, and
a third processing unit that decides the first route along which to send the first question data on a basis of the first value computed for the candidate of the first route and a first condition,
the first correspondence information is information associating first information, first specifying information that is information specifying the other information processing device, and first degree of correlation information that is information expressing a degree of correlation between the first information and the first specifying information,
the first value is a value expressing a degree of expectation regarding a first answer to the first question,
the first condition is a condition on deciding the first route along which to send the first question data from the candidate of the first route on a basis of the first value,
the first question data includes information related to a method of returning the first answer, and
the method of returning the first answer includes information specifying either a method of directly returning the first answer to the information processing device or a method of indirectly returning the first answer to the information processing device.

4. An information processing device comprising:
a first processing unit that sends first question data, the first question data being data of a first question, along a first route that includes one or more other information processing devices, wherein
the first processing unit is provided with
a second processing unit that computes a first value regarding a candidate of the first route on a basis of information expressing the first question and first correspondence information, and
a third processing unit that decides the first route along which to send the first question data on a basis of the first value computed for the candidate of the first route and a first condition,
the first correspondence information is information associating first information, first specifying information that is information specifying the other information processing device, and first degree of correlation information that is information expressing a degree of correlation between the first information and the first specifying information,
the first value is a value expressing a degree of expectation regarding a first answer to the first question,
the first condition is a condition on deciding the first route along which to send the first question data from the candidate of the first route on a basis of the first value,
the first processing unit is provided with
a fifth processing unit that determines content of a second question in second question data sent from a second information processing device, and
a sixth processing unit that outputs second answer data with respect to the second question data on a basis of a result of determining the content of the second question,
the second question data includes information related to a second route, and
the first processing unit is provided with
a seventh processing unit that outputs third question data to an output destination based on the second route, the third question data being data of a third question based on the second question.

5. The information processing device according to any one of claims 1 to 4, wherein
the second processing unit computes the first value for a plurality of candidates of the first route, and
the third processing unit decides one first route from among the plurality of candidates of the first route.

6. The information processing device according to any one of claims 1 to 5, wherein
the first route includes a route section in which two or more other information processing devices are arranged in parallel.

7. The information processing device according to any one of claims 1 to 6, wherein the first question data includes information related to the first route.

8. The information processing device according to any one of claims 1 to 7, wherein
the first processing unit is provided with
a fourth processing unit that updates the first correspondence information.

9. The information processing device according to any one of claims 1 to 8, wherein
the first processing unit is provided with
an eighth processing unit that converts first language information to second language information on a basis of second correspondence information,
the second correspondence information is information associating two pieces of language information and second degree of correlation information that is information expressing a degree of semantic correlation between the two pieces of language information, and
in a case in which the eighth processing unit converts the first language information included in information expressing the first question to the second language information on a basis of the second correspondence information, the first processing unit adjusts the first value on a basis of the second degree of correlation information associated with the first language information and the second language information.

10. The information processing device according to any one of claims 1 to 9, wherein
the first processing unit is provided with
a ninth processing unit that converts first target information to second target information on a basis of third correspondence information,
the third correspondence information is information associating two pieces of target information and third degree of correlation information that is information expressing a degree of correlation between the two pieces of target information, and
in a case in which the ninth processing unit converts the first target information included in information expressing the first question to the second target information on a basis of the third correspondence information, the first processing unit adjusts the first value on a basis of the third degree of correlation information associated with the first target information and the second target information.

11. An information processing method performed in an information processing device, the information processing method comprising:
sending, by a first processing unit of the information processing device, first question data, the first question data being data of a first question, along a first route that includes one or more other information processing devices;
computing, by a second processing unit of the first processing unit, a first value regarding a candidate of the first route on a basis of information expressing the first question and first correspondence information; and
deciding, by a third processing unit of the first processing unit, the first route along which to send the first question data on a basis of the first value computed for the candidate of the first route and a first condition, wherein
the first correspondence information is information associating first information, first specifying information that is information specifying the other information processing device, and first degree of correlation information that is information expressing a degree of correlation between the first information and the first specifying information,
the first value is a value expressing a degree of expectation regarding a first answer to the first question,
the first condition is a condition on deciding the first route along which to send the first question data from the candidate of the first route on a basis of the first value, and
in a case in which a candidate of the first route includes a plurality of other information processing devices, the first value is a value expressing a comprehensive degree of expectation related to the first answer to the first question from the plurality of other information processing devices.

12. An information processing method performed in an information processing device, the information processing method comprising:
sending, by a first processing unit of the information processing device, first question data, the first question data being data of a first question, along a first route that includes one or more other information processing devices;
computing, by a second processing unit of the first processing unit, a first value regarding a candidate of the first route on a basis of information expressing the first question and first correspondence information; and
deciding, by a third processing unit of the first processing unit, the first route along which to send the first question data on a basis of the first value computed for the candidate of the first route and a first condition, wherein
the first correspondence information is information associating first information, first specifying information that is information specifying the other information processing device, and first degree of correlation information that is information expressing a degree of correlation between the first information and the first specifying information,
the first value is a value expressing a degree of expectation regarding a first answer to the first question,
the first condition is a condition on deciding the first route along which to send the first question data from the candidate of the first route on a basis of the first value, and
the first route includes a route section in which two or more other information processing devices are arranged in series.

13. An information processing method performed in an information processing device, the information processing method comprising:
sending, by a first processing unit of the information processing device, first question data, the first question data being data of a first question, along a first route that includes one or more other information processing devices;
computing, by a second processing unit of the first processing unit, a first value regarding a candidate of the first route on a basis of information expressing the first question and first correspondence information; and
deciding, by a third processing unit of the first processing unit, the first route along which to send the first question data on a basis of the first value computed for the candidate of the first route and a first condition, wherein
the first correspondence information is information associating first information, first specifying information that is information specifying the other information processing device, and first degree of correlation information that is information expressing a degree of correlation between the first information and the first specifying information,
the first value is a value expressing a degree of expectation regarding a first answer to the first question,
the first condition is a condition on deciding the first route along which to send the first question data from the candidate of the first route on a basis of the first value,
the first question data includes information related to a method of returning the first answer, and
the method of returning the first answer includes information specifying either a method of directly returning the first answer to the information processing device or a method of indirectly returning the first answer to the information processing device.

14. An information processing method performed in an information processing device, the information processing method comprising:
sending, by a first processing unit of the information processing device, first question data, the first question data being data of a first question, along a first route that includes one or more other information processing devices;
computing, by a second processing unit of the first processing unit, a first value regarding a candidate of the first route on a basis of information expressing the first question and first correspondence information;
deciding, by a third processing unit of the first processing unit, the first route along which to send the first question data on a basis of the first value computed for the candidate of the first route and a first condition, wherein
the first correspondence information is information associating first information, first specifying information that is information specifying the other information processing device, and first degree of correlation information that is information expressing a degree of correlation between the first information and the first specifying information,
the first value is a value expressing a degree of expectation regarding a first answer to the first question,
the first condition is a condition on deciding the first route along which to send the first question data from the candidate of the first route on a basis of the first value;
determining, by a fifth processing unit of the first processing unit, content of a second question in second question data sent from a second information processing device;
outputting, by a sixth processing unit of the first processing unit, second answer data with respect to the second question data on a basis of a result of determining the content of the second question, wherein
the second question data includes information related to a second route; and
outputting, by a seventh processing unit of the first processing unit, third question data to an output destination based on the second route, the third question data being data of a third question based on the second question.

15. A program causing a computer forming an information processing device to achieve:
a function of sending first question data, the first question data being data of a first question, along a first route that includes one or more other information processing devices;
a function of computing a first value regarding a candidate of the first route on a basis of information expressing the first question and first correspondence information; and
a function of deciding the first route along which to send the first question data on a basis of the first value computed for the candidate of the first route and a first condition, wherein
the first correspondence information is information associating first information, first specifying information that is information specifying the other information processing device, and first degree of correlation information that is information expressing a degree of correlation between the first information and the first specifying information,
the first value is a value expressing a degree of expectation regarding a first answer to the first question,
the first condition is a condition on deciding the first route along which to send the first question data from the candidate of the first route on a basis of the first value, and
in a case in which a candidate of the first route includes a plurality of other information processing devices, the first value is a value expressing a comprehensive degree of expectation related to the first answer to the first question from the plurality of other information processing devices.

16. A program causing a computer forming an information processing device to achieve:
a function of sending first question data, the first question data being data of a first question, along a first route that includes one or more other information processing devices;
a function of computing a first value regarding a candidate of the first route on a basis of information expressing the first question and first correspondence information; and
a function of deciding the first route along which to send the first question data on a basis of the first value computed for the candidate of the first route and a first condition, wherein
the first correspondence information is information associating first information, first specifying information that is information specifying the other information processing device, and first degree of correlation information that is information expressing a degree of correlation between the first information and the first specifying information,
the first value is a value expressing a degree of expectation regarding a first answer to the first question,
the first condition is a condition on deciding the first route along which to send the first question data from the candidate of the first route on a basis of the first value, and
the first route includes a route section in which two or more other information processing devices are arranged in series.

17. A program causing a computer forming an information processing device to achieve:
a function of sending first question data, the first question data being data of a first question, along a first route that includes one or more other information processing devices;
a function of computing a first value regarding a candidate of the first route on a basis of information expressing the first question and first correspondence information; and
a function of deciding the first route along which to send the first question data on a basis of the first value computed for the candidate of the first route and a first condition, wherein
the first correspondence information is information associating first information, first specifying information that is information specifying the other information processing device, and first degree of correlation information that is information expressing a degree of correlation between the first information and the first specifying information,
the first value is a value expressing a degree of expectation regarding a first answer to the first question,
the first condition is a condition on deciding the first route along which to send the first question data from the candidate of the first route on a basis of the first value,
the first question data includes information related to a method of returning the first answer, and
the method of returning the first answer includes information specifying either a method of directly returning the first answer to the information processing device or a method of indirectly returning the first answer to the information processing device.

18. A program causing a computer forming an information processing device to achieve:
a function of sending first question data, the first question data being data of a first question, along a first route that includes one or more other information processing devices;
a function of computing a first value regarding a candidate of the first route on a basis of information expressing the first question and first correspondence information; and
a function of deciding the first route along which to send the first question data on a basis of the first value computed for the candidate of the first route and a first condition, wherein
the first correspondence information is information associating first information, first specifying information that is information specifying the other information processing device, and first degree of correlation information that is information expressing a degree of correlation between the first information and the first specifying information,
the first value is a value expressing a degree of expectation regarding a first answer to the first question,
the first condition is a condition on deciding the first route along which to send the first question data from the candidate of the first route on a basis of the first value;
the program further causing the computer to achieve:
a function of determining content of a second question in second question data sent from a second information processing device; and
a function of outputting second answer data with respect to the second question data on a basis of a result of determining the content of the second question, wherein
the second question data includes information related to a second route;
the program further causing the computer to achieve:
a function of outputting third question data to an output destination based on the second route, the third question data being data of a third question based on the second question.
